# EUROPÄISCHE PATENTSCHRIFT

(11) **EP 1 317 180 B1**
(45) Veröffentlichungstag und Bekanntmachung des Hinweises auf die Patenterteilung: **16.02.2005**
(21) Anmeldenummer: 01965278.3
(22) Anmeldetag: 12.09.2001
(51) Int. Cl.: A01N 43/18

(54) **ÖL-SUSPENSIONSKONZENTRATE AUF BASIS EINES CYCLOHEXENONOXIMETHER-LITHIUMSALZES UND DEREN VERWENDUNG ALS PFLANZENSCHUTZMITTEL**
OIL SUSPENSION CONCENTRATES BASED ON A CYCLOHEXENONE OXIME ETHER LITHIUM SALT AND THE USE THEREOF AS PLANT PROTECTION AGENTS
CONCENTRES DE SUSPENSION D'HUILE A BASE D'UN SEL DE LITHIUM CYCLOHEXENONOXIMETHER ET LEUR UTILISATION COMME AGENTS PHYTOSANITAIRES

(30) Priorität: 13.09.2000 DE 10045130
(43) Veröffentlichungstag der Anmeldung: 11.06.2003
(73) Patentinhaber: BASF AKTIENGESELLSCHAFT, 67056 Ludwigshafen (DE)
(72) Erfinder: KOBER, Reiner, 67136 Fussgönheim (DE); BERGHAUS, Rainer, 67346 Speyer (DE); KRÖHL, Thomas, 55129 Mainz (DE); ZIEGLER, Hans, 67112 Mutterstadt (DE); MAYWALD, Volker, 67071 Ludwigshafen (DE)
(74) Vertreter: Wolter, Thomas, Dr.
(86) Internationale Anmeldenummer: PCT/EP2001/010537
(87) Internationale Veröffentlichungsnummer: WO 2002/021921

(56) Entgegenhaltungen:
- WO-A-00/35288
- WO-A-97/20807
- DE-A- 19 701 123

## Beschreibung

Die vorliegende Erfindung betrifft Öl-Suspensionskonzentrate auf Basis von 2-{1-[2-(4-Chlorphenoxy)-propoxyimino]-butyl}-3-hydroxy-5-(tetrahydrothiopyran-3-yl)-cyclohex-2-enon-Lithiumsalz und bestimmten Formulierungshilfsstoffen sowie die Verwendung der Öl-Suspensionskonzentrate als Pflanzenschutzmittel, insbesondere als Reisherbizide.

Neben der Optimierung der Wirkstoffeigenschaften kommt mit Blick auf eine industrielle Produktion und Anwendung dieser Wirkstoffe der Entwicklung eines effizienten Pflanzenschutzmittels besondere Bedeutung zu. Durch eine sachgerechte Formulierung des Wirkstoffs muß ein optimaler Ausgleich zwischen teils gegenläufigen Eigenschaften wie der biologischen Wirksamkeit, der Toxikologie, möglichen Einflüssen auf die Umwelt und den Kosten gefunden werden.

Darüber hinaus bestimmt die Formulierung zu einem erheblichen Maß die Haltbarkeit eines Pflanzenschutzmittels. Dies ist dann besonders wichtig, wenn aufgrund von Wirkstoffinstabilitäten oder ungünstigen Lagerungsbedingungen diesbezüglich besonders hohe Anforderungen an ein Pflanzenschutzmittel gestellt werden.

Beispielsweise kommt Suspensionskonzentraten große praktische Bedeutung zu. Es handelt sich dabei um flüssige, heterogene Formulierungen von festem Wirkstoff in einer flüssigen Phase. Neben den allgemeinen Vorteilen flüssiger Formulierungen bezüglich Handhabung und Dosierbarkeit, beispielsweise unter ULV (Ultra Low Volume)-Bedingungen, können sich Suspensionskonzentrate darüber hinaus oftmals durch eine gute biologische Wirksamkeit bei relativ geringer Phytotoxizität auszeichnen. Typisch sind wäßrige Suspensionskonzentrate. Vereinzelt werden aber auch ölige Suspensionskonzentrate beschrieben, wobei hier das Problem besteht, daß viele Wirkstoffe und Wirkstoffsalze in den üblicherweise verwendeten öligen Phase löslich sind.

So beschreibt die WO 00/35288 die Formulierung von Glyphosaten bzw. Glufosinaten zusammen mit Cyclohexenonoximethern als Öl-Suspensionskonzentrate. Neben den freien Säuren werden dort auch Salze der Cyclohexenonoximether in Betracht gezogen. Diese haben sich im Versuch wegen zu geringer Stabilität allerdings als ungeeignet erwiesen, wie die Formulierung des Lithiumsalzes von 2-{1-[2-(3-Chlorallyloxy)-iminopropyl]-butyl}-3-hydroxy-5-(tetrahydropyran-3-yl)-cyclohex-2-enon zusammen mit Calcium-Glyphosat zeigt.

Die EP 0 313 317 beschreibt ölige Suspensionskonzentrate bestimmter Sulfonylharnstoff-Derivate, die auch in Form ihrer Alkali-, Erdalkali- oder Ammoniumsalze eingesetzt werden können. Pflanzliche Öle, vor allem Maisöl, und oberflächenaktive Stoffe, welche die pflanzlichen Öle in Wasser emulgieren können, werden verwendet. Ähnliche Suspensionskonzentrate auf Ölbasis sind in US 5,411,932 beschrieben. Auch hier werden pflanzliche Öle, insbesondere Maisöl und Rapsöl, darüber hinaus auch Mineralöle, sowie oberflächenaktive Stoffe zur Formulierung eines bestimmten Sulfonamids, Nicosulfuron, oder eines Salzes davon verwendet. Der an sich unzureichenden Stabilität flüssiger Sulfonylharnstoff-Formulierungen wird dadurch begegnet, daß Harnstoff zugesetzt wird.

Cyclohexenonoximether und deren Metallsalze sind als wertvolle Pflanzenschutzmittel allgemein bekannt. Sie werden vor allem als Gräser-Herbizide geschätzt. Als besonders geeignete herbizide Wirkstoffe haben sich Cyclohexenonoximether folgender Formel (Ia) und Metallsalze davon (WO 97/20807) erwiesen:

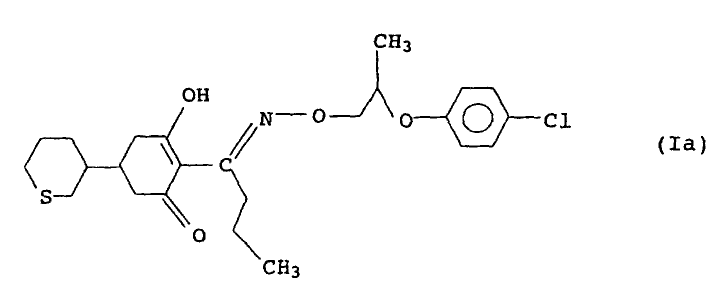

Allerdings ist aus der EP-A 266 068 bereits bekannt, daß Herbizide aus der Stoffklasse der Cyclohexenonoximether zur Zersetzung neigen. Besonders kritisch ist dabei die Lagerung entsprechender Pflanzenschutzformulierungen über einen längeren Zeitraum bei höheren Temperaturen. Dies gilt auch für die erwähnten Cyclohexenonoximether der Formel (Ia), deren Metallsalze eingeschlossen.

Angesichts dieser Problematik beschreibt die DE 195 10 887 lagerstabile feste Formulierungen, die neben einem Cyclohexenonoximether oder einem Salz davon bestimmte wasserlösliche basische Salze, insbesondere bestimmte Borate, Phosphate, Silikate, Sulfite, Citrate, Acetate und Carbonate enthalten. Es handelt sich hierbei um wasserlösliche Zusammensetzungen, vorzugsweise in Form von Pulvern oder Granulaten.

Die WO 97/20807 erwähnt zur Formulierung bestimmter Cyclohexenonoximether-Metallsalze neben festen auch eine Vielzahl flüssiger Formulierungen, auf die im Pflanzenschutzbereich üblicherweise zurückgegriffen wird. In diesem Zusammenhang werden inerte Hilfsstoffe wie Öle, niedere Alkohole, und stark polare Lösungsmittel, insbesondere Wasser, sowie übliche oberflächenaktive Stoffe genannt, die für die dort angesprochenen Formulierungen im Wesentlichen in Frage kommen sollen. Viele dieser Hilfsstoffe führen als entsprechende Formulierung allerdings zu einer raschen Zersetzung des Wirkstoffs.

Die Aufgabe, stabile Flüssigformulierungen des Cyclohexenonoximethers der Formel (Ia) mit guter biologischer Leistung zur Verfügung zu stellen, löst die vorliegende Erfindung durch Öl-Suspensionskonzentrate des entsprechenden Lithiumsalzes auf Basis bestimmter Carbonsäureester bzw. ausgewählter Tenside aus der Reihe der Sulfonate und der modifizierten Carbonsäuren.

Gegenstand der vorliegenden Erfindung sind daher ÖlSuspensionskonzentrate, umfassend
(a1) 2-{1-[2-(4-Chlorphenoxy)-propoxyimino]-butyl}-3-hydroxy-5-(tetrahydrothiopyran-3-yl)-cyclohex-2-enon-Lithiumsalz der Formel (I) 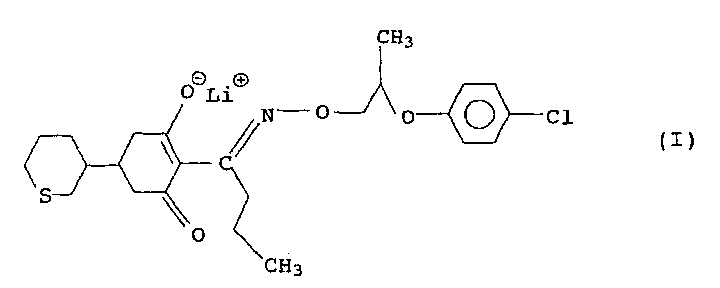 und
(b1)mindestens einem Mono- und/oder Dicarbonsäureester der Formel (IIa) oder (IIb),

   R¹-CO-OR² (IIa)

   R³-O-CO-A¹-CO-O-R⁴ (IIb)

   wobei R¹ für einen geradkettigen oder verzweigten, gesättigten oder ungesättigen aliphatischen Rest mit 6 bis 30 Kohlenstoffatomen, R² für geradkettiges oder verzweigtes C₁-C₈-Alkyl oder C₃-C₁₀-Cycloalkyl, A¹ für geradkettiges oder verzweigtes C₂-C₆-Alkylen oder C₃-C₁₀-Cycloalkylen steht und R³, R⁴ unabhängig voneinander für einen geradkettigen oder verzweigten, gesättigten oder ungesättigen aliphatischen Rest mit 1 bis 24 Kohlenstoffatomen stehen;
(c1)mindestens einem anionischen Tensid der Formel III,

   R⁵-SO₃⁻ 1/n M⁽ⁿ⁺⁾ (III)

   wobei M ein ein- oder zweiwertiges Kation ist (n = 1 oder 2) und R⁵ für einen geradkettigen oder verzweigten, aliphatischen oder heteroaliphatischen Rest mit 6 bis 30 Kohlenstoffatomen oder einen (C₆-C₃₀-Alkyl)arylrest steht, und
(c2)mindestens einem nichtionischen Tensid der Formel IV,

   [R⁶-CO-(EO)ₓ-]_{y}A² (IV)

   wobei R⁶ für einen geradkettigen oder verzweigten, gesättigten oder ungesättigten, gegebenenfalls monooder dihydroxylierten aliphatischen Rest mit 8 bis 30 Kohlenstoffatomen steht, die Summe aller x Null bis 100 beträgt, y für 1 bis 7 steht, A² für Hydroxy oder C₁-C₄-Alkyloxy steht, wenn y für 1 steht, oder A² von einem C₃-C₇-Polyol abgeleitetet ist, wenn y für 2 bis 7 steht.

Demnach betrifft die vorliegende Erfindung flüssige, heterogene wirkstoffhaltige Formulierungen. Sie enthalten festen Wirkstoff, der in einer öligen Phase verteilt ist.

Erfindungsgemäße Öl-Suspensionskonzentrate basieren auf einer Wirkstoffkomponente (a) und eine Formulierungskomponente (F). Erforderlichenfalls können weitere Zusätze enthalten sein.

Der Anteil der Wirkstoffkomponente (a) an dem Öl-Suspensionskonzentrat ist variabel. Typischerweise liegt er in einem Bereich von 1 bis 70 Gew.-%, vorzugsweise in einem Bereich von 5 bis 50 und insbesondere in einem Bereich von 5 bis 30 Gew.-%.

Im allgemeinen sind Mengenangaben auf das Gesamtgewicht des Öl-Suspensionskonzentrats zu beziehen, sofern nicht anderes angeben ist. Der Ausdruck "im wesentlichen" bezeichnet erfindungsgemäß in der Regel ein prozentuales Verhältnis von wenigstens 90 %, vorzugsweise von wenigstens 95 % und insbesondere von wenigstens 98 %.

Begriffe wie Alkyl, Alkoxy, etc. umfassen geradkettige oder verzweigte Kohlenwasserstoffgruppen, wie Methyl, Ethyl, n-Propyl, 1-Propyl, n-Butyl, i-Butyl, sek-Butyl, t-Butyl, n-Pentyl, n-Hexyl, n-Octyl, 2-Ethylhexyl, n-Nonyl, iso-Nonyl, n-Decyl, iso-Decyl, n-Undecyl, iso-Undecyl, n-Dodecyl, iso-Dodecyl, n-Tridecyl, iso-Tridecyl, Stearyl, n-Eicosyl, vorzugsweise mit - soweit nichts anderes angegeben ist - 1 bis 8, insbesondere 1 bis 6 und besonders bevorzugt 1 bis 4 Kohlenstoffatomen für kurzkettige Reste und 6 bis 30, insbesondere 8 bis 24 und besonders bevorzugt 12 bis 24 Kohlenstoffatomen für langkettige Reste.

Der Begriff "Cycloalkyl" umfasst mono- oder bicyclische, gegebenenfalls ein-, zwei oder dreifach mit C₁-C₄-Alkyl substituierte, gesättigte Kohlenwasserstoffgruppen, wie Cyclopropyl, Cyclobutyl, Cyclopentyl und vor allem Cyclohexyl, etc., vorzugsweise mit - soweit nichts anderes angegeben ist - 3 bis 10, insbesondere 3 bis 6 und besonders bevorzugt 6 Kohlenstoffatomen. Diese Ausführungen gelten analog für "Cycloalkylen" als entsprechende zweibindige Reste, von denen die Cycloalk-1,2-ylene bevorzugt sind.

Der Begriff "Alkenyl" umfasst geradkettige oder verzweigte ungesättigte Kohlenwasserstoffgruppen, die vorzugsweise eine, zwei oder drei Doppelbindung aufweisen, wie Ethenyl, Prop-2-en-1-yl, Oleyl etc., vorzugsweise mit - soweit nichts anderes angegeben ist - 3 bis 8, insbesondere 2 bis 6 und besonders bevorzugt 2 bis 4 Kohlenstoffatomen für kurzkettige Reste und 6 bis 30, insbesondere 8 bis 24 und besonders bevorzugt 12 bis 24 Kohlenstoffatomen für langkettige Reste.

Der Begriff "Alkylen" umfasst geradkettige oder verzweigte zweibindige Reste, wie Methylen, Eth-1,1-ylen, Eth-1,2-ylen, Prop-1,1-ylen, Prop-1,2-ylen, Prop-1,3-ylen, Prop-2,2-ylen, But-1,1-ylen, But-1,2-ylen, But-1,3-ylen, But-1,4-ylen, But-2,2-ylen, 2-Methylprop-1,3-ylen, Pent-1,1-ylen, Pent-1,2-ylen, Pent-1,3-ylen, Pent-1,4-ylen, Pent-1,5-ylen, Pent-2,2-ylen, Pent-2,3-ylen, Pent-2,4-ylen, Pent-3,3-ylen, 1-Methylbut-1,4-ylen, 2-Methylbut-1,4-ylen, etc., vorzugsweise mit - soweit nichts anderes angegeben ist - 2 bis 18, insbesondere 2 bis 10 und besonders bevorzugt 2 bis 6 Kohlenstoffatomen.

Das Lithiumsalz der Formel (I), 2-{1-[2-(4-Chlorphenoxy)-propoxyimino]-butyl}-3-hydroxy-5-(tetrahydrothiopyran-3-yl)-cyclohex-2-enon-Lithiumsalz, bildet als Komponente (a1) wenigstens einen Teil der Wirkstoffkomponente (a).

Die hier gewählte Darstellung der Verbindung der Formel (I) schließt isomere Formen dieser Verbindung mit ein. Insbesondere zu nennen sind geometrische und Stereoisomere, wie cis/trans-Isomere, Enantiomere oder Diastereoisomere, sowie Tautomere, die im vorliegenden Fall vor allem auf die Enolatstruktur zurückzuführen sind. Demnach können die Verbindungen der Formel (I) auch als Salz eines entsprechenden Cyclohexan-1,3-dion-Derivates beschrieben werden. Neben den im wesentlichen reinen Isomeren gehören zu der Verbindung der Formel (I) deren Isomerengemische, z.B. Stereoisomerengemische.

Neben dem Lithiumsalz der Formel (I) kann die Wirkstoffkomponente (a) einen oder mehrere weitere Pflanzenwirkstoffe enthalten.

Neben 2-{1-[2-(4-Chlorphenoxy)-propoxyimino]-butyl}-3-hydroxy-5-(tetrahydrothiopyran-3-yl)-cyclohex-2-enon, weiteren Salzen oder Derivaten davon sowie weiteren Cyclohexenonoximethern und deren Salzen kommen beispielsweise Mittel zur Bekämpfung von Schädlingen oder phytopathogenen Pilzen bzw. Bakterien in Betracht. Vor allem sind Vertreter anderer herbizider oder wachstumsregulierender Wirkstoffgruppen als weitere Pflanzenwirkstoffe zu nennen. Hierzu gehören insbesondere als Komponente (a2) Pflanzenwirkstoffe, die ausgewählt sind unter
- Bromobutide, Dimepiperate, Etobenzanid, Propanil,
- Anilofos, Mefenacet,
- 2,4-D sowie MCPB als Metallsalze, Naproanilide,
- Bentazone, insbesondere als Natriumsalz,
- Pyrazolynate/Pyrazolate, Sulcotrione als Metallsalz, bevorzugt aus der 1. Hauptgruppe,
- Esprocarb, Molinate, Pyributicarb, Thiobencarb/Benthiocarb,
- Quinclorac,
- Butachlor, Butenachlor, Pretilachlor, Thenylchlor,
- Cycloxydim, Sethoxydim, insbesondere in Form der Natrium und/oder Lithium-Salze,
- Pendimethalin,
- (R)-2-[4-(4-Cyano-2-fluorphenoxy)phenoxy]-propionsäure-n-butylester, Fenoxaprop-ethyl,
- Benzofenap, Pyrazoxyfen,
- Dithiopyr,
- 2,6-Bis[(4,6-dimethoxypyrimidin-2-yl)oxy)benzoesäure-Natriumsalz, 2-[(4,6-Dimethoxypyrimidin-2-yl)oxy]-6-[1-(methoxyimino)ethyl]benzoesäure-methylester,
- Azimsulfuron, Bensulfuron-methyl, Cinosulfuron, Cyclosulfamuron, Ethoxysulfuron, Imazosulfuron, Pyrazosulfuron-ethyl, vorteilhaft in Form ihrer Metallsalze,
- Dimethamethryn, Simetryn/Simetryne,
- Benfuresate,
- Cafenstrole,
- Cinmethylin, und
- Piperophos.

Erfindungsgemäß ist es bevorzugt, obige Wirkstoffe sofern sie acide OH- oder NH-Funktionen aufweisen als landwirtschaftlich brauchbare Salze, insbesondere als Metallsalze mit Metallkationen der 1. und 2. Hauptgruppe zu verwenden.

Von diesen weiteren Pflanzenschutzwirkstoffen können insbesondere Salze von Quinclorac mit ein- (n=1) oder zweiwertigen (n=2) Metallkationen M⁽ⁿ⁺⁾, also Carbonsäure-Salze der Formel (V) 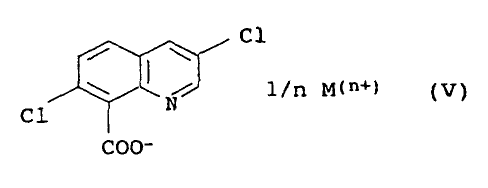 mit dem Lithiumsalz der Formel (I) vorteilhaft kombiniert werden.

Gemäß einer Ausführungsform der vorliegenden Erfindung besteht die Wirkstoffkomponente (a) im wesentlichen aus dem Lithiumsalz der Formel (I). Diese Ausführungsform betrifft Öl-Suspensionskonzentrate auf Basis eines herbiziden Wirkstoffs (Monopräparat).

Gemäß einer weiteren Ausführungsform der vorliegenden Erfindung besteht die Wirkstoffkomponente (a) im wesentlichen aus einer Kombination des Lithiumsalzes der Formel (I) und eines Carbonsäure-Metallsalzes der Formel (V). Diese Ausführungsform betrifft Öl-Suspensionskonzentrate auf Basis einer herbiziden Wirkstoffkombination (Kombinationspräparat).

Die jeweiligen Wirkstoffanteile in Kombinationspräparaten sind weitgehend variabel. Typischerweise enthält die Wirkstoffkomponente (a)
(a1)5 - 95 Gew.-%, vorzugsweise 10 bis 70 Gew.-% und insbesondere 20 bis 50 Gew.-% des Lithiumsalzes der Formel (I) und
(a2) 5 - 95 Gew.-%, vorzugsweise 30 bis 90 Gew.-% und insbesondere 50 bis 80 Gew.-% eines Carbonsäure-Metallsalzes der Formel (V) sowie
(a3) gegebenenfalls bis zu 90 Gew.-%, vorzugsweise bis zu 60 Gew.-% und insbesondere bis zu 30 Gew.-% eines weiteren, vorzugsweise herbiziden, Pflanzenwirkstoffs,
wobei sich die Mengenangaben jeweils auf das Gesamtgewicht der Wirkstoffkomponente (a) beziehen und die Summe aus den Komponenten (a1), (a2) und (a3) gemäß einer besonderen Ausführungsform 100 Gew.-% beträgt.

Einem anderen Aspekt zufolge enthält die Wirkstoffkomponente (a) verhältnismäßig größere Gewichtsanteile von Carbonsäure-Metallsalzen der Formel (V) als Lithiumsalz der Formel (I). Typischerweise liegt dieses Gewichtsverhältnis von (I) zu (V) in einem Bereich von 1:1,1 bis 1:4, vorzugsweise von 1:1,5 bis 1:3 und insbesondere von 1:2 bis 1:2,75.

Zweck der Formulierungskomponente (F) ist es, ein Öl-Suspensionskonzentrat auf Basis des Lithiumsalzes der Formel (I) auszubilden. Ferner können Teile der Formulierungskomponente adjuvante Wirkung, insbesondere wirkungsfördernde Wirkung haben.

Wenigstens ein Teil der insgesamt im Öl-SC vorhandenen Menge des Lithiumsalzes der Formel (I) liegt als Feststoff vor. Ein anderer, in der Regel geringerer Teil des Lithiumsalzes der Formel (I) kann in der Formulierungskomponente (F) gelöst sein. Vorteilhafterweise beträgt der Anteil an gelöstem Lithiumsalz der Formel (I), bezogen auf die insgesamt in der Öl-SC vorhandenen Menge, weniger als 1 Gew.-%, vorzugsweise weniger als 0,5 Gew.-% und insbesondere weniger als 0,3 Gew.-%.

Der Feststoffanteil bildet in der Formulierungskomponente (F) eine heterogene Phase aus (Suspension). Vorteilhafterweise liegt der Feststoff in dispergierter Form vor. Die Ausbildung stabiler Dispersionen ist bevorzugt.

Fester Wirkstoff liegt in der Regel in partikulärer Form vor. Die mittlere Partikelgröße der Wirkstoffpartikel beträgt vorteilhafterweise weniger als 10 µm und insbesondere weniger als 5 µm. Dabei liegen vorteilhafte Partikelgrößen in einem Bereich von 0,1 µm bis 10 µm und insbesondere 0,5 µm bis 5 µm. Einem weiteren Aspekt zufolge können vorteilhafte Partikelgrößen-Summenverteilungen damit beschrieben werden, daß mindestens 50% der Partikel eine Partikelgröße von weniger als 100 µm, vorzugsweise von weniger als 50 µm und insbesondere von weniger als 10 µm aufweisen. Öl-Suspensionskonzentrate mit Partikelgrößen-Summenverteilungen, wonach mindestens 90% der Wirkstoffpartikel eine Partikelgröße von weniger als 10 µm und insbesondere von weniger als 5 µm aufweisen, sind besonders bevorzugt. Obige Angaben zu Partikelgrößen beziehen sich auf Messungen bei Raumtemperatur mit dem Cilas Granulometer 715 der Fa. Cilas, Marcoussis, Frankreich, wobei feststoffgesättigte Proben vermessen werden, die erforderlichenfalls mit der fluiden Phase des erfindungsgemäßen Öl-SCs verdünnt werden.

Enthält die Wirkstoffkomponente (a) einen oder mehrere weitere Pflanzenwirkstoffe, so können sich diese Pflanzenwirkstoffe in der Formulierungskomponente (F) im Prinzip in beliebiger Form verteilen. So können weitere Pflanzenwirkstoffe unabhängig voneinander zumindest teilweise als Feststoff oder in gelöster Form vorliegen. Vorteilhafterweise bilden auch weitere in der Wirkstoffkomponente (a) enthaltene Pflanzenwirkstoffe eine heterogene Phase aus. Besondere Ausgestaltungen dieses Falls ergeben sich aus obigen Ausführungen zu dem Lithiumsalz der Formel (I), die für weitere Pflanzenwirkstoffe und insbesondere für Carbonsäure-Metallsalze der Formel (V) entsprechend gelten.

So betrifft die vorliegende Erfindung gemäß einer Ausführungsform Öl-Suspensionskonzentrate des Lithiumsalzes der Formel (I) mit den zuvor beschriebenen Wirkstoffanteilen, Feststoffanteilen und/oder Partikelgrößen. Insbesondere gehören hierzu Öl-Suspensionskonzentrate mit einem Gehalt an Lithiumsalz der Formel (I) von 10 bis 30 Gew.-%, einem auf die Gesamtmenge an Lithiumsalz bezogenen Feststoffanteil von wenigstens 99 Gew.-%, einer mittleren Partikelgröße von 1 bis 3 µm und einer Partikelgrößen-Summenverteilung, wonach typischerweise wenigstens 60% der Partikel eine Partikelgröße von weniger als 2 µm aufweisen.

Die vorliegende Erfindung betrifft gemäß einer weiteren Ausführungsform Öl-Suspensionskonzentrate des Lithiumsalzes der Formel (I) und wenigstens eines Carbonsäure-Metallsalzes der Formel (V) mit den zuvor beschriebenen Wirkstoffanteilen, Feststoffanteilen und/oder Partikelgrößen.

Der Anteil der Formulierungskomponente (F) beträgt in der Regel 30 bis 99 Gew.-%, vorzugsweise 50 bis 95 Gew.-% und insbesondere 70 bis 95 Gew.-%. Üblicherweise setzt sich die Formulierungskomponente (F) aus mehreren Komponenten zusammen. Diese Komponenten enthalten Hilfsstoffe, die vor allem formulierungstechnische Funktion besitzen. In diesem Sinne sind die Komponenten auch als Hilfsstoffkomponenten zu bezeichnen. Dieser Begriff schließt allerdings weitere Funktionen und Wirkungen dieser Komponenten mit ein, beispielsweise wirkstoffstabilisierende und insbesondere wirkungsfördernde Effekte.

Die Formulierungskomponente (F) umfasst insbesondere wenigstens eine fluide Komponente (b) und wenigstens eine oberflächenaktive Komponente (c).

Der Anteil der fluiden Komponente (b), bezogen auf das Gesamtgewicht des Öl-Suspensionskonzentrats, beträgt in der Regel 10 bis 90 Gew.-%, vorzugsweise 30 bis 80 Gew.-% und insbesondere 40 bis 70 Gew.-%.

Die Komponente (b) dient vor allem als Lösungsmittel löslicher Bestandteile oder als Verdünnungsmittel unlöslicher Bestandteile des Öl-Suspensionskonzentrats.

wenigstens ein Teil der Komponente (b) wird von einem oder mehreren Ölen gebildet. Der Begriff "Öl" bezeichnet erfindungsgemäß eine unter den Anwendungsbedingungen des Öl-Suspensionskonzentrats flüssige, in Wasser praktisch unlösliche Substanz. Wasserunlöslich sind Substanzen im erfindungsgemäßen Sinne insbesondere dann, wenn zum Lösen von einem Teil Substanz wenigstens 1.000 - 10.000 Teile und vorzugsweise wenigstens 10.000 Teile Wasser erforderlich sind.

Prinzipiell brauchbar sind beispielsweise Mineralöle, synthetische Öle sowie pflanzliche und tierische Öle.

Hierzu gehören vor allem aprotische Lösungsmittel, wie Mineralölfraktionen von mittlerem bis hohem Siedepunkt, z.B. Kerosin und Dieselöl, ferner Kohlenteeröle, Kohlenwasserstoffe, Paraffinöle, gegebenenfalls hydrierte oder teilhydrierte Aromaten oder Alkylaromaten aus der Benzol- oder Naphthalin-Reihe, aliphatische oder aromatische Carbonsäure- oder Dicarbonsäureester, insbesondere die Ester der Formeln (IIa) oder (IIb), Fette oder Öle pflanzlichen oder tierischen Ursprungs, wie Mono-, Di- und Triglyceride, in Reinform oder als Gemisch beispielsweise in Form öliger Naturstoffextrakte, z.B. Olivenöl, Sojaöl, Sonnenblumenöl, Castoröl, Sesamöl, Maisöl, Erdnussöl, Rapsöl, Leinsamenöl, Mandelöl, Rhizinusöl, Safloröl, sowie deren Raffinate, z.B. hydrierte oder teilhydrierte Produkte davon und/oder deren Ester, insbesondere Methyl- und Ethylester.

Der Ölanteil am Gesamtgewicht des Öl-Suspensionskonzentrats beträgt in der Regel 10 bis 90 Gew.-%, vorzugsweise 30 bis 80 Gew.-% und insbesondere 40 bis 70 Gew.-%.

Gemäß einer besonderen Ausführungsform umfaßt die Komponente (b) erfindungsgemäßer Öl-Suspensionskonzentrate wenigstens die oben angegebene Komponente (b1).

Gemäß einer weiteren besonderen Ausführungsform wird die oben angegebene Komponente (b1) als Teil einer weiteren Formulierung (stand alone-Produkt) mit den erfindungsgemäßen Öl-Suspensionskonzentraten zu einem zweckmäßigen Zeitpunkt, in der Regel kurz vor der Applikation, vermischt.

Die Mono- und Dicarbonsäureester der Formel (IIa) oder (IIb) gehören erfindungsgemäß zu den Ölen. Sie weisen langkettige aliphatische Reste auf, die sich von Fettsäuren bzw. Fettalkoholen ableiten können. Dies gilt für die Bedeutung der Reste R³ und R⁴ in Dicarbonsäureestern der Formel (IIb) und vor allem für Monocarbonsäureester der Formel (IIa) und hier speziell für die Bedeutung des Restes R¹.

Beispielsweise können sich die Reste von Fettsäuren wie Tridecansäure, Laurinsäure, Elaeostearinsäure, Undecansäure, Caprinsäure, Erucasäure, Pelargonsäure, Caprylsäure, Önanthsäure, Capronsäure, Isostearinsäure, Ölsäure, Palmitoleinsäure, Linolsäure, Linolensäure, Arachidonsäure, Clupanodonsäure und Docosahexaensäure ableiten.

Demnach steht R¹ zweckmäßigerweise für einen geradkettigen oder - insbesondere einfach - verzweigten, gesättigten oder - bis zu 6-fach und insbesondere einfach - ungesättigten, aliphatischen Rest mit 6 bis 30 und vorzugsweise 8 bis 24 Kohlenstoffatomen. Hierzu gehören vor allem die entsprechenden Alkyl- und Alkenylreste. Ein bevorzugter Alkylrest ist Dodecanyl. Ein bevorzugter Alkenylrest ist Octadec-9-enyl, insbesondere *cis*-Octadec-9-enyl (Oleyl).

Steht der Rest R¹ für einen relativ langkettigen Rest, so leitet sich der Rest R² in der Regel von relativ kurzkettigen Alkoholen ab. Demnach steht R² zweckmäßigerweise für geradkettiges oder - insbesondere einfach oder zweifach - verzweigtes Alkyl mit 1 bis 8 vorzugsweise 1 bis 6 und insbesondere 1 bis 4 Kohlenstoffatomen, oder für Cycloalkyl mit vorzugsweise 6 Kohlenstoffatomen. Bevorzugte Alkylreste sind Methyl, Ethyl, Isopropyl, Butyl, 2-Ethylhexyl sowie n- und iso-Octyl. Insbesondere bevorzugt sind Methyl, Ethyl und Butyl und hiervon vor allem Methyl. Ein bevorzugter Cycloalkylrest ist Cyclohexanyl.

Beispielsweise können folgende Monocarbonsäureester der Formel (IIa) einzeln, oder in Kombination untereinander sowie mit Dicarbonsäureestern der Formel (IIb) verwendet werden: Ölsäureester, insbesondere Methyloleat und Ethyloleat, Laurinsäureester, insbesondere 2-Ethylhexyllaurat, Octyllaurat und Isopropyllaurat, Isopropylmyristat, Palmitinsäureester, insbesondere 2-Ethylhexylpalmitat und Isopropylpalmitat, Stearinsäureester, insbesondere Stearinsäure-n-butylester und 2-Ethylhexansäure-2-ethylhexylester. Besonders hervorzuheben sind die Ölsäureester, insbesondere Methyloleat.

Der Rest A¹ stellt einen zweiwertigen Rest dar, der zwei Carboxylkohlenstoffe miteinander verknüpft. So steht A¹ zweckmäßigerweise für geradkettiges oder - insbesondere einfach - verzweigtes Alkylen mit 2 bis 6 und vorzugsweise 2 bis 4 Kohlenstoffatomen oder für Cycloalkylen, insbesondere Cyclohexylen. Bevorzugte Alkylenreste sind Eth-1,2-ylen, Prop-1,3-ylen und vor allem But-1,4-ylen. Ein bevorzugter Cycloalkylenrest ist Cyclohex-1,2-ylen.

Die Reste R³ und R⁴ können verschieden sein. Aus praktischen Gründen werden vor allem Dicarbonsäureester verwendet, in denen R³ und R⁴ die gleiche Bedeutung besitzen. Prinzipiell können R³ und R⁴ von kurz- und langkettigen Alkoholen abgeleitet sein. zweckmäßigerweise stehen R³ und R⁴ unabhängig voneinander für einen geradkettigen oder - insbesondere einfach - verzweigten, gesättigten oder - insbesondere 1- oder 2-fach - ungesättigten, aliphatischen Rest mit 1 bis 24, vorzugsweise 1 bis 12 Kohlenstoffatomen. Hierzu gehören vor allem die entsprechenden Alkyl- und Alkenylreste. Bevorzugte Alkylreste sind Methyl und Ethyl, aber auch Octyl und Nonyl, insbesondere Isononyl.

Beispielsweise können folgende Dicarbonsäureester der Formel (IIb) einzeln, oder in Kombination untereinander sowie mit Monocarbonsäureestern der Formel (IIa) verwendet werden: Adipinsäureester, insbesondere Dimethyladipat, Di-n-butyladipat, Di-n-octyladipat, Di-iso-octyladipat, auch als Bis-(2-ethylhexyl)adipat bezeichnet, Di-n-nonyladipat, Di-iso-nonyladipat und Ditridecyladipat; Bernsteinsäureester, insbesondere Di-n-octylsuccinat und Di-iso-octylsuccinat, und Di-(iso-nonyl)cyclohexan-1,2-dicarboxylat. Besonders hervorzuheben sind Dimethyladipat, Bis-(2-ethylhexyl)adipat, Di-iso-nonyladipat.

Der Anteil an Mono- und/oder Dicarbonsäureestern der Formel (IIa) oder (IIb), sofern vorhanden, bezogen auf das Gesamtgewicht des Öl-Suspensionskonzentrats, beträgt in der Regel 5 bis 70 Gew.-%, vorzugsweise 15 bis 60 Gew.-% und insbesondere 20 bis 50 Gew.-%.

Die vorliegende Erfindung betrifft gemäß einer Ausführungsform Öl-Suspensionskonzentrate mit einer Komponente (b), die im wesentlichen aus mindestens einem Mono- und/oder Dicarbonsäureester der Formel (IIa) oder (IIb) (Komponente (b1)) gebildet wird.

Gemäß einer alternativen Ausführungsform enthält die Komponente (b) keinen Mono- und/oder Dicarbonsäureester der Formel (IIa) oder (IIb), dafür aber wenigstens ein weiteres Öl als Komponente (b2). Diese Komponente (b2) kann insbesondere aus den oben angegebenen Ölen bzw. aprotischen Lösungsmitteln ausgewählt werden. Insbesondere sind hier
(b2)wenigstens ein C₈- bis C₃₀-Kohlenwasserstoff der n- oder iso-Alkan-Reihe oder ein Gemisch davon, und aromatische oder cycloaliphatische C₇- bis C₁₈-Kohlenwasserstoffverbindungen, oder ein Gemisch davon
zu nennen.

Beispiele für C₈- bis C₃₀-Kohlenwasserstoffe der n- oder iso-Alkan-Reihe sind n-und iso-Octan, -Decan, -Hexadecan, -Octadecan, -Eicosan, und vorzugsweise Kohlenwasserstoffgemische, wie Paraffinöl (das in technischer Qualität bis zu etwa 5% Aromaten enthalten kann) und ein C₁₈-C₂₄-Gemisch, das unter der Bezeichnung Spraytex-Öl im Handel von der Fa. Texaco erhältlich ist.

Zu den aromatischen oder cycloaliphatischen C₇- bis C₁₈-Kohlenwasserstoffverbindungen gehören insbesondere aromatische oder cycloaliphatische Lösungsmittel aus der Alkyl-Aromatenreihe. Diese Verbindungen können unhydriert, teilhydriert oder vollständig hydriert sein. Zu derartigen Lösungsmitteln der Komponente (b2) gehören insbesondere Mono-, Di- oder Trialkylbenzole, Mono-, Di-, Trialkyl-substituierte Tetraline und/oder Mono-, Di-, Tri- oder Tetraalkyl-substituierte Naphthaline (Alkyl steht vorzugsweise für C₁-C₆-Alkyl). Beispiele derartiger Lösungsmittel sind Toluol, o-, m-, p-Xylol, Ethylbenzol, Isopropylbenzol, tert.-Butylbenzol und Gemische, wie die unter der Bezeichnung Shellsol und Solvesso vertriebenen Produkte der Fa. Exxon, z.B. Solvesso 100, 150 und 200.

Vorzugsweise ist die Komponente (b2) ausgewählt unter wenigstens einem, gegebenenfalls hydrierten oder teilhydrierten, Alkylaromaten aus der Benzol- oder Naphthalin-Reihe, vor allem den unter den Handelsbezeichnungen Shellsol und Solvesso vertriebenen Produkten der Firma Exxon, z.B. Solvesso 100, 150 und 200. Demnach kann die Komponente (b2) im wesentlichen aus besagten Alkylaromaten gebildet werden. Sie kann aber auch zusätzlich C₈- bis C₃₀-Kohlenwasserstoffe der n- oder iso-Alkan-Reihe enthalten, die in vielen Fällen aus praktischen Gründen miteingebracht werden.

Den Anteil an C₈- bis C₃₀-Kohlenwasserstoffen der n- oder iso-Alkan-Reihe an den erfindungsgemäßen Öl-Suspensionskonzentraten sollte vorteilhafterweise geringer sein, als der Anteil einer möglichen Komponente (b1) bzw. als der Anteil der Komponente (b2). Vorzugsweise beträgt das Gewichtsverhältnis des Anteils an C₈- bis C₃₀-Kohlenwasserstoffen der n- oder iso-Alkan-Reihe zum Wirkstoffanteil weniger als 3:1, vorzugsweise weniger als 1,5:1 und insbesondere weniger als 0,5:1.

Die vorliegende Erfindung betrifft ebenfalls gemäß einer weiteren Ausführungsform Öl-Suspensionskonzentrate mit einer Komponente (b), die zusätzlich zu wenigstens einem Mono- und/oder Dicarbonsäureester der Formel (IIa) oder (IIb) wenigstens ein weiteres Öl als Komponente (b2) enthält.

Im Rahmen dieser Ausführungsform beträgt der Anteil an Mono- und/oder Dicarbonsäureestern der Formel (IIa) oder (IIb) in der Regel 5 bis 70 Gew.-% und vorzugsweise 15 bis 60 Gew.-% und der Anteil an weiteren Ölen (Komponente (b2)) in der Regel 5 bis 60 Gew.-% und vorzugsweise 10 bis 45 Gew.-%.

Vorteilhafterweise weisen erfindungsgemäße Öl-Suspensionskonzentrate im wesentlichen keine oder nur geringe Anteile an C₁-C₈-Monoalkoholen wie Methanol, Ethanol, Propanol, Isopropanol, Butanol, Isobutanol, tert-Butanol, Cyclohexanol und 2-Ethylhexanol, C₁-C₈-Ketonen wie Cyclohexanon, und stark polaren Lösungsmitteln, wie Wasser, auf.

Der Anteil an den zuvor genannten Alkoholen und Ketonen, bezogen auf das Gesamtgewicht des Öl-Suspensionskonzentrats, liegt vorzugsweise bei weniger als 10 Gew.-% und insbesondere bei weniger als 5 Gew.-%.

Der Wassergehalt erfindungsgemäßer Öl-Suspensionskonzentrate, bezogen auf das Gesamtgewicht der Formulierungen, beträgt vorzugsweise weniger als 1 Gew.-% und insbesondere weniger als 0,5 Gew.-%. Ganz besonders bevorzugt sind Öl-Suspensionskonzentrate, deren Wassergehalt in einem Bereich von 0,1 bis 0,5 Gew.-% und insbesondere in einem Bereich von 0,05 bis 0,25 Gew.-% liegt.

Der Anteil der oberflächenaktiven Komponente (c), bezogen auf das Gesamtgewicht des Öl-Suspensionskonzentrats, beträgt in der Regel 10 bis 60 Gew.-%, vorzugsweise 15 bis 40 Gew.-% und insbesondere 20 bis 30 Gew.-%.

Die Komponente (c) dient vor allem als Dispergator bzw. Emulgator, insbesondere zum Dispergieren des Feststoffanteils in dem Öl-Suspensionskonzentrat bzw. zum Emulgieren der Ölphase eines in Wasser gegebenen Öl-Suspensionskonzentrats. Ferner können Teile der Komponete (c) als Netzmittel dienen.

Wenigstens ein Teil der Komponente (c) wird von einem oder mehreren Tensiden gebildet. Der Begriff "Tensid" bezeichnet hier grenzflächenaktive bzw. oberflächenaktive Mittel.

Prinzipiell brauchbar sind anionische, kationische und amphotere Tenside, wobei Polymer-Tenside sowie Tenside mit Heteroatomen in der hydrophoben Gruppe eingeschlossen sind.

Zu den anionischen Tensiden gehören beispielsweise Carboxylate, insbesondere Alkali-, Erdalkali- und Ammoniumsalze von Fettsäuren, z.B. Kaliumstearat, die üblicherweise auch als Seifen bezeichnet werden; Acylglutamate; Sarkosinate, z.B. Natriumlauroylsarkosinat; Taurate; Methylcellulosen; Alkylphosphate, insbesondere Mono- und Diphosphorsäurealkylester; Sulfate, insbesondere Alkylsulfate und Alkylethersulfate; Sulfonate, insbesondere Sulfonate der Formel (III), weitere Alkyl- und Alkylarylsulfonate, insbesondere Alkali-, Erdalkali- und Ammoniumsalze von Arylsulfonsäuren sowie alkylsubstituierten Arylsulfonsäuren, Alkylbenzolsulfonsäuren, wie beispielsweise Lignin- und Phenolsulfonsäure, Naphthalin- und Dibutylnaphthalinsulfonsäuren, oder Dodecylbenzolsulfonate, Alkylnaphthalinsulfonate, Alkylmethylestersulfonate, Kondensationsprodukte von sulfoniertem Naphthalin und Derivaten davon mit Formaldehyd, Kondensationsprodukte von Naphthalinsulfonsäuren, Phenol- und/oder Phenolsulfonsäuren mit Formaldehyd oder mit Formaldehyd und Harnstoff, Mono- oder Dialkylbernsteinsäureestersulfonate; sowie Eiweißhydrolysate und Lignin-Sulfitablaugen. Die zuvor genannten Sulfonsäuren werden vorteilhafterweise in Form ihrer neutralen oder gegebenenfalls basischen Salze verwendet.

Zu den kationischen Tensiden gehören beispielsweise quaternierte Ammoniumverbindungen, insbesondere Alkyltrimethylammonium- und Dialkyldimethylammonium-Halogenide und -alkylsulfate sowie Pyridin- und Imidazolin-Derivate, insbesondere Alkylpyridinium-Halogenide.

Zu den nichtionischen Tensiden gehören beispielsweise die Verbindungen der Formel (IV), weitere Alkoxylate und vor allem Ethoxylate sowie nichtionische Tenside, insbesondere
- Fettalkohol-polyoxyethylen-ester, beispielsweise Laurylalkohol-polyoxyethylenetheracetat,
- Alkyl-Polyoxyethylen- und -polyoxypropylen-ether, z.B. von iso-Tridecylalkohol und Fettalkohol-Polyoxy-ethylenether, Alkylarylalkohol-Polyoxyethylenether, z.B. Octylphenol-Polyoxyethylenether,
- alkoxylierte tierische und/oder pflanzliche Fette und/oder Öle, beispielsweise Maisölethoxylate, Rizinusölethoxylate, Talgfettethoxylate,
- Glycerinester, wie beispielsweise Glycerinmonostearat,
- Fettalkoholalkoxylate und Oxoalkoholalkoxylate, insbesondere vom Typ RO-(R₉O)ₓ(R₁₀O)_{y}R₁₁ mit R₉ und R₁₀ unabhängig voneinander = C₂H₄, C₃H₆, C₄H₈ und R₁₁ = H, oder C₁-C₁₂-Alkyl, R = C₃-C₃₀-Alkyl oder C₆-C₃₀-Alkenyl, x und y unabhängig voneinander 0 bis 50, wobei nicht beide für 0 stehen können, wie iso-Tridecylalkohol und Oleylalkohol-polyoxyethylenether,
- Alkylphenolalkoxylate, wie beispielsweise ethoxyliertes iso-Octyl-, Octyl- oder Nonyl-phenol, Tributylphenol-polyoxyethylenether,
- Fettaminalkoxylate, Fettsäureamid- und Fettsäurediethanolamidalkoxylate, insbesondere deren Ethoxylate,
- Zuckertenside, Sorbitester, wie beispielsweise Sorbitanfettsäureester (Sorbitanmonooleat, Sorbitantristearat), Polyoxyethylensorbitanfettsäureester, Alkylpolyglycoside, N-Alkylgluconamide,
- Alkylmethylsulfoxide,
- Alkyldimethylphosphinoxide, wie beispielsweise Tetradecyldimethylphosphinoxid.

Zu den amphoteren Tensiden gehören beispielsweise Sulfobetaine, Carboxybetaine und Alkyldimethylaminoxide, z.B. Tetradecyldimethylaminoxid.

Zu den polymeren Tensiden gehören beispielsweise Di-, Tri- und Multiblockpolymere vom Typ (AB)ₓ, ABA und BAB, z.B. Polyethylenoxid-Block-Polypropylenoxid-Block-Polyethylen-oxid, Polystyrol-Block-Polyethylenoxid, und AB-Kammpolymere, z.B. Polymethacrylatcomb-Polyethylenoxid.

Weitere Tenside, die hier beispielhaft genannt werden sollen, sind Perfluortenside, Silikontenside, Phospholipide, wie beispielsweise Lecithin oder chemisch modifizierte Lecithine, Aminosäuretenside, z.B. N-Lauroylglutamat und oberflächenaktive Homound Copolymere, z.B. Polyvinylpyrrolidon, Polyacrylsäuren in Form ihrer Salze, Polyvinylalkohol, Polypropylenoxid, Polyethylenoxid, Maleinsäureanhydrid-Isobuten-Copolymere und Vinylpyrrolidon-Vinylacetat-Copolymere.

Sofern nicht spezifiziert, handelt es sich bei den Alkylketten der oben aufgeführten Tenside um lineare oder verzweigte Reste mit üblicherweise 8 bis 20 Kohlenstoffatomen.

Die Komponente (c) erfindungsgemäßer Öl-Suspensionskonzentrate umfaßt wenigstens die oben angegebenen Tensidkomponenten (c1) und (c2).

Die Tensidkomponente (c1) wird von mindestens einem anionischen Tensid der Formel (III) gebildet. Es handelt sich um bestimmte Sulfonate. Dazu gehören insbesondere Alkansulfonate sowie Sulfosuccinate, so daß R⁵ zweckmäßigerweise für einen geradkettigen oder - insbesondere 1- bis 2-fach - verzweigten, aliphatischen oder heteroaliphatischen Rest mit 6 bis 30, vorzugsweise wenigstens 8 und insbesondere 12 bis 24 Kohlenstoffatomen steht. Für Alkansulfonate kann sich R⁵ insbesondere von Fettalkylresten, beispielsweise in Anlehnung an oben genannte Fettsäuren, ableiten. Besondere heteroaliphatische Reste sind durch eine oder zwei Estergruppierungen -OC(O)- unterbrochen. Insbesondere steht R¹ in diesem Zusammenhang für Succin-2-ylate, Mono- und Diester eingeschlossen, und α-gebundene Fettsäureester.

Sulfosuccinate sind bevorzugte anionische Tenside der Formel III. Hier steht R⁵ für einen Rest -CH(C(O)-O-R⁷)CH₂-C(O)-O-R⁸, worin R⁷, R⁸ unabhängig voneinander die für R³ und R⁴ angegebenen Bedeutungen annehmen können und insbesondere für Alkylreste mit 1 bis 12 und vorzugsweise 5 bis 8 Kohlenstoffatomen stehen. Ein bevorzugter Alkylrest ist Octyl, insbesondere iso-Octyl.

Aufgrund der negativen Ladung anionischer Tenside sind Gegenkationen erforderlich, so daß M für ein 1- oder 2-wertiges Kation steht. Prinzipiell eignet sich jedes landwirtschaftlich einsetzbare, anorganische oder organische Kation. Bevorzugt werden Kationen von Metallen, wie Lithium, Natrium, Calcium, Kalium, Magnesium, Zink, Mangan, wobei Lithium, Natrium und Calcium besonders bevorzugt sind.

Ein bevorzugtes Sulfosuccinat ist Dioctylsuccinat, beispielsweise das Natriumsalz.

Zu den anionischen Tensiden der Formel III gehören auch Alkylarylsulfonate, so daß R⁵ zweckmäßigerweise auch für einen Alkylsubstituierten Arylrest steht. Der Arylrest kann einfach oder mehrfach, dann insbesondere zweifach oder dreifach, wobei 2 Substituenten an derselben Position sitzen können, mit gleichen oder verschiedenen Alkylresten substituiert sein. Die Alkylreste weisen in der Regel 6 bis 30, vorzugsweise 10 bis 24 und insbesondere 8 bis 12 Kohlenstoffatome auf. Sie können unabhängig voneinander geradkettig oder - insbesondere 1-, 2-, 3- oder 4-fach - verzweigt sein. Von den geradkettigen können beispielsweise Decanyl, Undecanyl, Dodecanyl, Tridecanyl und Tetradecanyl, von den verzweigten beispielsweise Tetrapropylen genannt werden. Ein bevorzugter Arylrest ist Phenyl.

Ein bevorzugtes Alkylarylsulfonat ist Dodecylphenylsulfonat, beispielsweise das Natrium-, Lithium oder Calciumsalz.

Der Anteil an anionischen Tensiden der Formel III beträgt, bezogen auf das Gesamtgewicht des Öl-Suspensionskonzentrats, in der Regel 1 bis 40 Gew.-%, vorzugsweise 7,5 bis 30 Gew.-% und insbesondere 10 bis 30 Gew.-%.

Die Tensidkomponente (c2) wird von mindestens einem nichtionischen Tensid der Formel IV gebildet. Hierbei handelt es sich um gegebenenfalls ethoxylierte Carbonsäuren und Ester mono- oder polyfunktioneller Alkohole (Polyole).

Der Rest R⁶ leitet sich insbesondere von Fettsäureresten ab, beispielsweise den oben genannten, so daß R⁶ zweckmäßigerweise für einen geradkettigen oder - insbesondere 1- bis 2-fach - verzweigten, gesättigten oder - insbesondere einfach, zweifach oder dreifach - ungesättigten, gegebenenfalls mono- oder dihydroxylierten aliphatischen Rest mit 8 bis 30, vorzugsweise 12 bis 24 und insbesondere 10 bis 24 Kohlenstoffatomen steht. Insbesondere gehören hierzu Palmityl, Stearyl, Arachidyl, Hexadecenyl, Oleyl, Linolyl, Linolenyl, Rizinoleyl, Eiocosanyl sowie Mono- und Dihydroxystearyl, von denen Rizinoleyl und Oleyl bevorzugt sind.

Sind die nichtionischen Tenside der Formel IV ethoxyliert, so gibt die Summe aller x die mittlere Ethoxylierungszahl mit in der Regel 3 bis 100 und insbesondere 5 bis 50 an.

Steht A² für Hydroxy, so ist y = 1 und die mittlere Ethoxylierungszahl beträgt vorteilhafterweise 5 bis 50 und vorzugsweise 15 bis 40. Insbesondere sind in diesem Zusammenhang entsprechende Rhizinusöl- und Ölsäurepolyethoxylate zu nennen.

Steht A² für gegebenenfalls verzweigtes Alkyloxy mit 1 bis 4 und vorzugsweise 1 oder 2 Kohlenstoffatomen, so ist y = 1 und die mittlere Ethoxylierungszahl beträgt 3 bis 100 und vorzugsweise 20 bis 50.

Ist A² von einem Polyol mit 3 bis 7 und insbesondere 6 Kohlenstoffatomen abgeleitet, so beträgt der Wert von y = 2 bis 7 und vorzugsweise 3 bis 6. Dabei sind y Hydroxywasserstoffatome des Rests A² durch jeweils einen Rest R⁶-CO-(EO)ₓ- ersetzt, wobei mehrere Reste R⁶ und mehrere Indizes x gleich oder verschieden sein können. Vorzugsweise sind mehrere Reste R⁶ gleich, während die Indizes x verschieden sein können und in der Regel einer Gauß-Verteilung folgen. Insbesondere leitet sich A² von einem Zuckeralkohol, wie Sorbitol oder Glycerin ab. Eine bevorzugte Bedeutung von A² ist Sorbitol. Sofern ethoxyliert, beträgt die mittlere Ethoxylierungszahl 5 bis 50 und vorzugsweise 15 bis 40. Insbesondere sind in diesem Zusammenhang die entsprechenden Sorbitolpolyethoxyoleate und -stearate zu nennen.

Der Anteil an nichtionischen Tensiden der Formel IV beträgt bezogen auf das Gesamtgewicht des Öl-Suspensionskonzentrats, in der Regel 1 bis 40 Gew.-%, vorzugsweise 2,5 bis 25 Gew.-% und insbesondere 5 bis 15 Gew.-%.

Die vorliegende Erfindung betrifft in einer Ausführungsform Öl-Suspensionskonzentrate mit einer Komponente (c), die im wesentlichen von einer Tensidkomponente (c1) und einer Tensidkomponente (c2) gebildet wird.

Die vorliegende Erfindung betrifft in einer weiteren Ausführungsform Öl-Suspensionskonzentrate mit einer Komponente (c), die im wesentlichen von einem Gemisch der Tensidkomponenten (c1) und (c2) gebildet wird. Im Rahmen dieser Ausführungsform beträgt der Anteil an Tensidkomponente (c1) in der Regel 1 bis 40 Gew.-% und vorzugsweise 7,5 bis 30 Gew.-% und der Anteil an Tensidkomponente (c2) beträgt in der Regel 1 bis 20 Gew.-% und vorzugsweise 5 bis 10 Gew.-%, wobei die jeweiligen Anteile sich auf das Gesamtgewicht des Öl-Suspensionskonzentrats beziehen.

Die vorliegende Erfindung betrifft in einer weiteren Ausführungsform Öl-Suspensionskonzentrate mit einer Komponente (c), die zusätzlich zur Tensidkomponente (c1) und Tensidkomponente (c2) weitere Tenside enthält, die insbesondere unter den vorstehend beschriebenen ausgewählt werden können.

Dabei sollte der Anteil weiterer Tensiden an den erfindungsgemäßen Öl-Suspensionskonzentraten vorteilhafterweise geringer sein, als der Anteil an Tensiden der Formel (III) und (IV). Vorzugsweise beträgt das Gewichtsverhältnis des Anteils an weiteren Tensiden zum Wirkstoffanteil weniger als 1,5:1, vorzugsweise weniger als 1:1 und insbesondere weniger als 0,5:1.

Der Anteil der sich aus Komponente (b1), (c1) und (c2) zusammensetzenden Komponente ist in der Regel größer als 10 Gew.-%, vorzugsweise größer als 20 Gew.-% und insbesondere größer als 25 Gew.-%. Vorteilhafterweise liegt dieser Gesamtanteil in einem Bereich von 30 bis 90 Gew.-%, vorzugsweise von 30 bis 80 Gew.-% und insbesondere von 35 bis 75 Gew.-%.

Erfindungsgemäß bevorzugt sind Öl-Suspensionskonzentrate mit einer Formulierungskomponente (F), die zumindest zum Teil auf einer fluiden Komponente (b1) in Kombination mit einer Tensidkomponente (c1) und/oder (c2) basiert. Bezogen auf das Gesamtgewicht des Öl-Suspensionskonzentrats, beträgt der Anteil der fluiden Komponente (b1) zusammen mit der Tensidkomponente (c1) und/oder (c2) vorteilhafterweise 10 bis 90 Gew.-%, vorzugsweise 15 bis 85 Gew.-% und insbesondere 20 bis 70 Gew.-%. Besondere Ausführungsformen dieser Öl-Suspensionskonzentrate ergeben sich in Anlehnung an die zuvor in Bezug auf die Komponenten (b1), (c1) und (c2) beschriebenen Ausgestaltungen.

Demnach betrifft die vorliegende Erfindung gemäß einer besonders bevorzugten Ausführungsform Öl-Suspensionskonzentrate auf Basis der Komponenten (b1), (c1) und (c2). Diese Ö1-Suspensionskonzentrate können insbesondere auch eine Komponente (b2) enthalten.

Sofern vorhanden, beträgt der Anteil an weiteren Hilfsstoffen als Komponente (d), bezogen auf das Gesamtgewicht des Öl-Suspensionskonzentrats, in der Regel bis zu 15 Gew.-% und vorzugsweise bis zu 10 Gew.-%.

Die Komponente (d) kann vielerlei Zwecke erfüllen. Die Wahl geeigneter Hilfsstoffe erfolgt den Anforderungen entsprechend üblicherweise durch den Fachmann. Insbesondere zu nennen sind Stabilisierungsmittel.

Bevorzugte Stabilisatoren sind Lithium-Salze, die als Komponente (d1) verwendet werden können. Hierzu zählen Lithium-Salze anorganischer oder organischer Säuren, insbesondere Lithiumhydroxid, Lithiumcarbonat, Lithiumchlorid und Lithiumcarboxylate sowie -sulfonate organischer Carbonsäuren und Sulfonsäuren, insbesondere den Sulfonsäuren der Formel (III). Derartige Lithium-Salze können in dem Öl-Suspensionskonzentrat gelöst sein oder - zumindest teilweise - als Feststoff, beispielsweise in partikulärer und insbesondere disperser Form, vorliegen.

Sofern vorhanden, beträgt der Anteil an der Komponente (d1), bezogen auf die Gesamtmenge an Wirkstoff in Lithiumsalzform, vorteilhafterweise 1 bis 30 mol-% und vorzugsweise 3 bis 20 mol-%.

Als Stabilisatoren können auch Antiabsetzmittel als Komponente (d2) verwendet werden. Diese dienen vor allem zur rheologischen Stabilisierung erfindungsgemäßer Öl-Suspensionskonzentrate. Mitunter können die thixotropen Eigenschaften der Formulierung verbessert werden. Vor allem soll dem Absetzen von Feststoff und/oder Agglomerationseffekten in den Öl-Suspensionskonzentraten entgegengewirkt werden. Wünschenswert ist eine Verringerung der Serumbildung und/oder der Sedimentation von Feststoff.

Brauchbare Antiabsetzmittel sind beispielsweise unter den Verdikkungsmitteln zu finden. Es handelt sich dabei insbesondere um Substanzen, die eine gelartige Struktur ausbilden können, wodurch die Viskosität der fluiden Phase erfindungsgemäßer Öl-Suspensionskonzentrate erhöht wird. Hierzu gehören beispielsweise organische Polymere sowie anorganische Substanzen, insbesondere feinverteilte mineralische Stoffe wie Bentonite, Talcite oder Hektorite. Besonders haben sich basische mineralische Systeme bewährt, beispielsweise Talcite, die gegebenenfalls durch Calcinierung von der Carbonat-Form in die Hydroxid-Form überführt wurden.

Sofern vorhanden, beträgt der Anteil an der Komponente (d2), bezogen auf das Gesamtgewicht des Öl-Suspensionskonzentrats, vorteilhafterweise bis zu 15 Gew.-% und vorzugsweise 1 bis 10 Gew.-%.

Zu Stabilisatoren gehören auch wasseraufnehmende Mittel, die als Komponente (d3) verwendet werden können. In diesem Zusammenhang sind vor allem alkalische Borsalze zu nennen, insbesondere wasserfreies, calciniertes oder entwässertes Bor-Salz vom Borax-Typ.

Sofern vorhanden, beträgt der Anteil an der Komponente (d3), bezogen auf das Gesamtgewicht des Öl-Suspensionskonzentrats, vorteilhafterweise bis zu 15 Gew.-% und vorzugsweise 2 bis 10 Gew.-%.

Neben der Wirkstoffkomponente (a) und der Formulierungskomponente (F) können die erfindungsgemäßen Öl-Suspensionskonzentrate weitere Zusätze enthalten. Von Interesse ist beispielsweise die Mischbarkeit mit Mineralsalzlösungen, welche zur Behebung von Ernährungs- und Spurenelementmängeln eingesetzt werden. Es können auch nichtphytotoxische Öle und Ölkonzentrate sowie Antidriftreagenzien zugesetzt werden. Weiterhin kommen Antischaummittel in Frage, insbesondere solche vom Silicon-Typ, beispielsweise das von der Firma Wacker vertriebene Silicon SL, das in einer Menge von 0,1 bis 10 g und vorzugsweise 1 bis 2 g pro Liter zugesetzt werden kann.

Die Herstellung erfindungsgemäßer Öl-Suspensionskonzentrate kann in an sich bekannter Weise erfolgen. Dazu werden zumindest Teile der Komponenten zusammen gegeben. Hierbei ist zu beachten, daß Produkte, insbesondere handelsübliche Produkte, verwendet werden können, deren Bestandteile zu unterschiedlichen Komponenten beitragen können. Beispielsweise kann ein bestimmtes Tensid in einem aprotischen Lösungmittel gelöst sein, so daß dieses Produkt sowohl zu Komponente (b) als auch zu Komponente (c) beiträgt. Ferner können geringe Anteile an unerwünschten Substanzen, wie Wasser oder niederen Alkoholen bzw. Ketonen mit handelsüblichen Produkten eingebracht werden. Daher erfolgt die Auswahl der zu erfindungsgemäßen Öl-SCs zu verarbeitenden Produkte vorteilhafterweise unter dem Aspekt eines möglichst geringen Gehaltes an Wasser und/oder niederen Alkoholen bzw. Ketonen. Als Gemisch, insbesondere in Form einer Suspension, sind die zusammengegebenen Produkte dann in der Regel intensiv zu vermahlen.

Als Mahlkörper kann man Glasmahlkörper oder andere mineralische oder metallische Mahlkörper, in der Regel in einer Größe von 0,1-30 mm und insbesondere von 0,6-2 mm verwenden. Man zerkleinert das Gemisch in der Regel solange, bis die gewünschte Partikelgröße erreicht ist.

Allgemein kann die Vermahlung in Kreisfahrweise, d.h. laufendes Umpumpen des Öl-SCs im Kreis, oder mittels Passagenfahrweise, d.h. komplettes und wiederholtes Durchpumpen beziehungsweise Durchfahren eines Öl-SC-Ansatzes, durchgeführt werden.

Die Vermahlung kann mit herkömmlichen Kugel-, Perl- oder Rührwerksmühlen erfolgen, z.B. in einer Dynomühle (Fa. Bachofen), mit Ansatzgrößen von beispielsweise 0,5 bis zu 1 Liter in sogenannter Passagenfahrweise. Nach mehreren - insbesondere 4 bis 6 - Passagen (Durchpumpen der Aufschlämmung durch die Mühle mit Hilfe einer Schlauchpumpe) werden dabei nach mikroskopischer Auswertung mittlere Partikelgrößen von 0,5 bis 10 µm erreicht.

Anschließend kann die Einarbeitung weiterer Hilfsmittel erfolgen, z.B. durch Homogenisieren mit geeigneten Vorrichtungen wie KPGoder Magnetrührern.

Es ergeben sich mehrere mögliche Herstellungsvarianten, beispielsweise die Direktvermahlung oder die Abmischung aus einem Öl-Suspensionskonzentrat-Vorkonzentrat.

Zur Direktvermahlung wird der überwiegende Teil der Komponente (b) zusammen mit der Komponente (c) vorgelegt und die Wirkstoffkomponente (a) als Feststoff zugegeben. Anschließend wird der Formulieransatz mit der Restmenge an Komponente (b) aufgefüllt. Danach wird der Ansatz wie oben beschrieben vermahlen. Eventuell zuzusetzende Komponente (d) kann zu einem beliebigen Zeitpunkt zugesetzt werden. Bevorzugt ist es, die Stabilisierungsmittel, vor allem anorganische Stabilisatoren, ebenfalls zu vermahlen. Die Vermahlung kann gemeinsam mit dem Wirkstoff vorgenommen werden. Sie können aber auch getrennt davon vermahlen werden, beispielsweise als sogenannte Master-Batches, wobei in diesem Fall üblicherweise eine höhere Konzentration verarbeitet wird, die dann zum Öl-Suspensionskonzentrat gegeben wird.

Für die Abmischung aus dem Öl-Suspensionskonzentrat-Vorkonzentraten wird zunächst die Wirkstoffkomponente (a) mit einem Teil der Komponente (b) zu einem Vorkonzentrat in der zuvor beschriebenen Weise vermahlen. Anschließend wird das Vorkonzentrat vorgelegt, mit Komponente (c) versetzt und durch Zugabe von weiterer Komponente (b) auf den gewünschten Wirkstoffgehalt eingestellt. Auch hier kann Komponente (d), sofern vorhanden, zu einem beliebigen Zeitpunkt beigemischt werden. Ebenfalls ist es bevorzugt, Stabilisierungsmittel während der Vermahlung zuzusetzen.

Das Lithiumsalz der Formel (I) kann bei der Herstellung der Öl-Suspensionskonzentrate als Feststoff eingesetzt werden.

Prinzipiell geeignete Verfahren zur Herstellung von 2-{1-[2-(4-Chlorphenoxy)-propoxyimino]-butyl}-3-hydroxy-5-(tetrahydrothiopyran-3-yl)-cyclohex-2-enon-Lithiumsalz der Formel (I) sind z.B. in der WO 97/20807 erläutert. Hierzu gehört die Umsetzung von 2-{1-[2-(4-Chlorphenoxy)-propoxyimino]-butyl}-3-hydroxy-(5-tetrahydrothiopyran-3-yl)-cyclohex-2-enon der Formel (Ia) 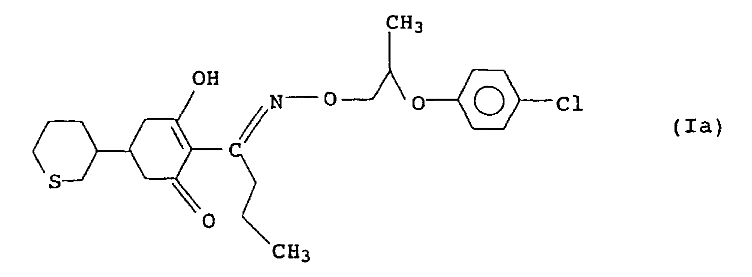 mit einem basischen Lithiumsalz und die Gewinnung der Verbindung der Formel (I). Als basisches Lithiumsalz kommen beispielsweise entsprechende Hydride, Hydroxide, Alkoholate oder Carbonate in Betracht. Ferner kann das Lithium-Salz der Formel (I) durch Natrium/Lithium-Austausch aus dem entsprechenden Cyclohexenonoximether-Natrium-Salz hergestellt werden.

Vorzugsweise wird die Verbindung der Formel (Ia) mit Lithiumhydroxid in einem Methanol und wenigstens einen aromatischen Kohlenwasserstoff enthaltenden Lösungsmittelgemisch umgesetzt und vor Gewinnung der Verbindung der Formel (I) wenigstens ein Teil des Lösungsmittels entfernt. Zu brauchbaren aromatischen Kohlenwasserstoffen gehören insbesondere Lösungsmittel der Benzolreihe, wie alkylsubstituierte Benzole, z.B. Toluol und Xylol. Vor allem kommt Toluol in Betracht. So setzt man vorzugsweise eine Lösung der Verbindung (Ia) in Toluol ein. Die Konzentration der Verbindung der Formel (Ia) beträgt vorzugsweise 5 bis 40 Gew.-%, vorzugsweise 10 bis 30 Gew.-% und insbesondere etwa 20 Gew.-%, bezogen auf das Gesamtgewicht der einzusetzenden Lösung. Lithiumhydroxid (LiOH) kann beispielsweise in wasserfreier Form oder als Hydrat, insbesondere Monohydrat, eingesetzt werden. Vorzugsweise verwendet man eine Lösung von LiOH, die auf Methanol basiert, neben diesem aber auch andere Lösungsmittel enthalten kann. Bevorzugt sind methanolische LiOH-Lösungen, die neben möglichen weiteren Lösungsmitteln wenigstens 70 Gew.-%, vorzugsweise wenigstens 80 Gew.-% und insbesondere wenigstens 85 Gew.-% Methanol, bezogen auf die Gesamtmenge an Lösungmittel der zu verwendenden LiOH-Lösung, enthalten. Eine methanolische LiOH-Lösung enthält zweckmäßigerweise 1 bis 7 Gew.-%, vorzugsweise 2 bis 6 Gew.-% und insbesondere etwa 5 Gew.-% LiOH. Die Mengenangaben beziehen sich auf das Gesamtgewicht der eingesetzten Lösung vor Zugabe. Um eine vollständige Umsetzung sicherzustellen, wird die Lithiumhydroxid-Lösung üblicherweise im molaren Überschuss eingesetzt. Vorzugsweise wird ein molarer Überschuß von 0,5 bis 10% bezogen auf den als Ausgangsprodukt eingesetzten Cyclohexenonoximether (Ia) verwendet. Es kann aber auch sinnvoll sein, Lithiumhydroxid im Molverhältnis 1:1 mit dem Cyclohexenonoximether (Ia) umzusetzen. In diesem Fall kann man beispielweise die Zugabe von LiOH, insbesondere als Lithiumhydroxid-Lösung, mit einer geeigneten pH-Elektrode überwachen und solange zudosieren, bis der Äquivalenzpunkt erreicht ist. Die Dosierzeiten für die jeweiligen Reaktionspartner liegen üblicherweise im Bereich von 10 Minuten bis 360 Minuten, vorzugsweise 10 Minuten bis 120 Minuten, insbesondere bei etwa 30 Minuten. Die Umsetzung wird üblicherweise bei Temperaturen von -20°C und 60°C, bevorzugt 0-40°C, besonders bevorzugt 20-30°C durchgeführt. Vor Gewinnung des Cyclohexenonoximethersalzes (I) wird wenigstens ein Teil des Lösungsmittelgemisches, insbesondere Methanol, aus dem Lösungsmittelgemisch entfernt. Dies erfolgt in der Regel zusammen mit anderen Komponenten des Lösungsmittelgemisches, insbesondere als Methanol/Toluol/Wasser-Gemisch. Die Entfernung erfolgt vorzugsweise durch Destillation, üblicherweise bei Temperaturen zwischen 20 und 70°C, bevorzugt bei 30-60°C und besonders bevorzugt bei 40-50°C. Die Destillation kann unter Normaldruck oder bevorzugt unter vermindertem Druck durchgeführt werden. Es bildet sich eine Suspension. Demnach kann es sinnvoll sein, soviel Lösungsmittel zu entfernen, daß die Verbindung der Formel (I) im wesentlichen vollständig ausfällt. Einem besonderen Aspekt zufolge wird Methanol im wesentlichen vollständig aus dem Reaktionsgemisch entfernt. Die Gewinnung des Cyclohexenonoximether-Lithiumsalzes (I) erfolgt üblicherweise, indem man die resultierende Suspension einer Fest/Flüssig-Trennung unterzieht. Bevorzugt werden Filtration, insbesondere Druckfiltration, Bandfiltration, Vakuumfiltration, Zentrifugation, und ähnliches. Eine Reinigung des abgetrennten Feststoffs, insbesondere in Form eines Filterkuchens, ist in der Regel zweckmäßig. Dazu kann mit einem geeigneten Lösungsmittel, insbesondere mit Toluol, gewaschen werden. In der Regel ist auch zweckmäßig, den abgetrennten Feststoff, insbesondere den Filterkuchen, zu trocknen. Eine besondere Form des nach diesem Verfahren erhältlichen Produkts weist einen Gehalt an (I) von wenigstens 96 Gew.-%, vorzugsweise von wenigstens 97 Gew.-% und insbesondere von wenigstens 98 Gew.-%, bezogen auf das Gesamtgewicht des gewonnenen Produktes, auf.

Diese Verfahren gestattet nicht nur eine vergleichsweise effizientere Gewinnung des Verfahrensprodukts, sondern die nach diesem Verfahren herstellbaren Cyclohexenonoximether-Li-Salze (I) bilden überraschenderweise vergleichsweise stabilere Öl-SC-Formulierungen. Dies ist vor allem für eine Verwendung als Reisherbizid und einem weiteren Aspekt zufolge für eine Verwendung im tropischen Bereich von Bedeutung. Dabei ist es vorteilhaft, eine vergleichsweise hohe Dauerlagerstabilität bei erhöhter Temperatur im Bereich von 30-40°C gewährleisten zu können.

Das Lithiumsalz der Formel (I) kann aber auch während der Herstellung des Öl-Suspensionskonzentrats quasi in-situ erzeugt werden. Dies gelingt beispielsweise dadurch, daß man anstatt des Lithium-Salzes der Formel (I) die Säure der Formel (Ia) zusammen mit entsprechenden Mengen Lithiumhydroxid vermahlt. Freigesetztes Wasser kann gebunden oder entfernt werden. Hierzu kommen beispielsweise die oben als Komponente (d3) beschriebenen wasserbindenden Mittel in Frage oder es kann azeotrop, beispielsweise in Gegenwart von Toluol, abdestilliert werden.

Gegenstand der vorliegenden Erfindung ist auch die Verwendung erfindungsgemäßer Öl-Suspensionskonzentrate als Pflanzenschutzmittel in der Landwirtschaft. Diese Verwendung beinhaltet ein Verfahren zur Behandlung von Pflanzen, bei dem man eine wirksame Menge wenigstens eines erfindungsgemäßen Öl-Suspensiosnkonzentrat appliziert.

In Abhängigkeit von der jeweiligen Applikationsmethode können die erfindungsgemäßen Öl-Suspensionskonzentrate in einer Vielzahl von Kultur- und Zierpflanzen zur Beseitigung unerwünschter Pflanzen eingesetzt werden. In Betracht kommen beispielsweise folgende Kulturen:
Allium cepa, Ananas comosus, Arachis hypogaea, Asparagus officinalis, Beta vulgaris spp. altissima, Beta vulagris spp. rapa, Brassica napus var. napus, Brassica napus var. napobrassica, Brassica rapa var. silvestris, Camellia sinensis, Carthamus tinctorius, Carya illinoinensis, Citrus limon, Citrus sinensis, Coffea arabica (Coffea canephora, Coffea liberica), Cucumis sativus, Cynodon dactylon, Daucus carota, Elaeis guineensis, Fragaria vesca, Ficus elastica, Glycine max, Gossypium hirsutum, (Gossypium arboreum, Gossypium herbaceum, Gossypium vitifolium), Helianthus annuus, Hevea brasiliensis, Hordeum vulgare, Humulus lupulus, Ipomoea batatas, Juglans regia, Lens culinaris, Linum usitatissimum, Lycopersicon lycopersicum, Malus spp., Manihot esculenta, Medicago sativa, Musa spp., Nicotiana tabacum (N.rustica), Olea europaea, Oryza sativa, Phaseolus lunatus, Phaseolus vulgaris, Picea abies, Pinus spp., Pisum sativum, Prunus avium, Prunus persica, Pyrus communis, Ribes sylestre, Ricinus communis, Saccharum officinarum, Secale cereale, Solanum tuberosum, Sorghum bicolor (s. vulgare), Theobroma cacao, Trifolium pratense, Triticum aestivum, Triticum durum, Vicia faba, Vitis vinifera, Zea mays.

Erfindungsgemäße Öl-Suspensionskonzentrate werden insbesondere als Gräserherbizide und vor allem für Reiskulturen verwendet.

Dazu werden die erfindungsgemäßen Öl-Suspensionskonzentrate vor Gebrauch in der Regel durch Verdünnen in üblicher Weise in eine zur Anwendung brauchbare Form überführt. Bevorzugt ist das Verdünnen mit Wasser oder auch aprotischen Lösungsmitteln, beispielsweise im Tankmixverfahren zwecks Flugzeugapplikation (ULV-Applikation). Die Verwendung in Form einer Spritzbrühen-Zubereitung ist bevorzugt. Appliziert wird in der Regel im Vorauflaufoder Nachauflaufverfahren.

Durch das Vorliegen einer praktisch wasserfreien Formulierung auf Öl-Basis wird auch eine Applikation im ULV-Verfahren (ultra low volume) ermöglicht, z. B. durch Flugzeug-Applikation.

Für eine übliche Tankmix-Spritzbrühe werden pro ha 0,25 bis 5, bevorzugt 0,5 bis 2,0 1, des erfindungsgemäßen Öl-Suspensionskonzentrats mit Wasser auf 5 bis 2.000 1 verdünnt. Für eine ULV-Tankmixspritzbrühe werden pro ha 0,25 bis 10 1, vorzugsweise 0,5 bis 5 1, des erfindungsgemäßen Öl-Suspensionskonzentrats auf 5 bis 50 1 mit einer Ölphase, bevorzugt einem Öl der Komponente (b), beispielsweise einem Spraytex-Öl, oder mit Wasser oder einem Gemisch aus Wasser und Öl im Volumenverhältnis von etwa 2:1 bis 4:1 verdünnt. Der Tankmix-Spritzbrühe werden gegebenenfalls 0,1 Gew.-% bis 5 Gew.-% (bezogen auf Spritzbrühe) an weiteren anionischen, kationischen oder nicht-ionischen Tensiden, Hilfsmitteln, Polymeren und/oder den vorstehend genannten anderen herbiziden Wirkstoffen zugesetzt. Beispielhafte Stoffe für derartige Tenside und weitere Hilfsmittel sind vorstehend bereits beschrieben. Insbesondere sind Stärke und Stärkederivate, z.B. eine Carboxyl- und Sulfonsäuregruppen enthaltende Stärke (Nu-Film der Union Carbide Corp.) sowie Spreitmittel und Extender, wie Vapor Guard der Miller Chemical & Fertilizer Corp., zu nennen.

Die Erfindung wird durch die nachfolgenden Beispiele näher erläutert:

### Herstellungsbeispiele

### Referenzbeispiel 1: Lithiumsalz der Formel (I)

702,78 g (0,400 mol) einer 26,5%igen toluolischen Lösung des Cyclohexenonoximethers (Ia) werden bei 25°C unter Rühren vorgelegt und mit 229,47 g Toluol verdünnt, wodurch eine Konzentration des Cyclohexenonoximethers (Ia) von 20% eingestellt wird. Anschließend werden 200,98 g (0,420 mol) einer 5 %igen LiOH-Lösung (kalziniertes LiOH (98+); Chemetall) in MeOH innerhalb von 30 min zugefahren. Es wird 1 h bei 25°C gerührt. Danach werden 370,59 g eines MeOH/Toluol/Wasser-Gemisches bei 50°C im Vakuum abdestilliert. Die Temperatur wird hierbei bei 50°C gehalten und der Druck geregelt von 450 mbar auf 100 mbar abgesenkt. Die Destillationszeit beträgt 210 min. Nach Abschluß der Destillation werden 13 g Methanol zugesetzt, 15 min bei Raumtemperatur gerührt und die Suspension aus dem Rührbehalter abgelassen und auf eine Druckfilternutsche gegeben. Nach beendeter Filtration wird der Rührbehälter mit 174,00 g (200 ml) frischem Toluol ausgespült und der Filterkuchen mit diesem Spültoluol gewaschen. Danach wird der Filterkuchen zweimal mit je 87,0 g (100 ml) frischem Toluol gewaschen. Anschließend wird der Filterkuchen im Vakuumtrockenschrank bei 24 h bei 50°C getrocknet. Erhalten werden 181,01 g Filterkuchen mit einem Gehalt von 98,2%. Unter Berücksichtigung dieses Gehalts beträgt die Ausbeute 94,1%.

### Referenzbeispiel 2: Öl-Suspensionskonzentrat durch Direktvermahlung (D):

Etwa 90 Gew.-% der Komponente (b) werden mit der Gesamtmenge der Komponente (c) vorgelegt. Die Wirkstoffkomponente (a) wird als festes Pulver (Referenzbeispiel 1) zugegeben. Anschließend wird der Formulieransatz mit der Restmenge an Komponente (b) auf 1 Liter aufgefüllt. Danach wird der Ansatz unter Verwendung von Glasperlen (0,9 - 1,2 mm) als Mahlhilfsmittel bei ca. 0°C in einer Dynomühle der Firma Bachofen über Passagenfahrweise gemahlen, bis eine Partikelgrößen-Summenverteilung erreicht ist, wonach ca. 60% der Partikel eine Partikelgröße von weniger als 2 µm aufweisen. Typischerweise werden dazu 5 Passagen benötigt.

### Referenzbeispiel 3: Öl-Suspensionskonzentrat durch Abmischung aus Wirkstoffvorkonzentrat (A)

Die Wirkstoffkomponente (a) wird mit etwa 30 Gew.-% an Komponente (b), wie zuvor beschrieben, zu einem Vorkonzentrat vermahlen. Anschließend wird das Vorkonzentrat vorgelegt, mit Komponente (c) vermischt und mit Restanteilen an Komponente (b) auf den gewünschten Wirkstoffgehalt eingestellt.

### Beispiele 1 bis 23: Öl-Suspensionskonzentrate

Unter Anwendung der Herstellungsvariante (D) bzw. (A) werden Öl-Suspensionskonzentrate den Angaben der nachfolgenden Tabelle 2 entsprechend hergestellt (Beispiele 1 bis 23).

**Tabelle 2:**

| Wirk- und Hilfsstoffe bestimmter Öl-Suspensionskonzentrate, angegeben als ["Bezeichnung"/"g/kg Öl-Suspensionskonzentrat"], sofern nicht anderes vermerkt | | | | |
|---|---|---|---|---|
| Bsp. | Wirkstoff | Komponente (b) | Komponente (c) | |
| 1 | I / 75 | Me-Oleat / 413 Solvesso 150 / 208 | Aerosol OT-A / 300 | A |
| 2 | I / 75 | Plastomoll DOA / 413 Solvesso 150 / 208 | Emulpon EL 20 / 300 | A |
| 3 | I / 75 | Me-Oleat / 500 Glissopal 2300 / 61 | Aerosol OT-A / 250 Emulpon EL 20 / 50 | D |
| 4 | I / 75 | Me-Oleat / 500 Glissofluid A13 / 60 | Aerosol OT-A / 250 Emulpon EL 20 / 50 | D |
| 5 | I / 75 | Me-Oleat / 500 Solvesso 150 / 125 | Aerosol OT-A / 250 Atlas G 1086 / 50 | A |
| 6 | I / 100 | Me-Oleat / 500 Solvesso 150 / 94 | Emulan A / 50 | A |
| 7 | I / 100 | DBE-6 / 650 | Aerosol OT-A / 150 Emulan A / 50 | A |
| 8 | I / 100 | DBE / 650 | Aerosol OT-A / 150 Emulpon EL 20 / 50 | A |
| 9 | I / 100 | DBE / 650 | Aerosol OT-A / 150 Emulan A / 50 | A |
| 10 | I / 75 | Me-Oleat / 413 Solvesso 150 / 208 | Agrilan AEC 211 / 300 | A |
| 11 | I / 75 | Plastomoll DOA / 413 Solvesso 150 / 208 | Agrilan AEC 233 / 300 | A |
| 12 | I / 75 | Me-Oleat / 413 Solvesso 150 / 208 | Aerosol OT-A / 150 Pluronic RPE 2520 /100 | A |
| 13 | I / 75 | Me-Oleat / 500 Solvesso 150 / 120 | Aerosol OT-A / 150 Atlox 4914 / 150 | A |
| 14 | I / 75 | Plastomoll DOA / 413 Solvesso 150 / 208 | Emulpon EL 20 / 250 Plurafac LF 131 / 50 | A |
| 15 | I / 75 | Me-Oleat / 200 Cyclohexanon / 200 Solvesso 150 / ad 11 | Aerosol OT-A / 250 Emulpon EL 20 / 50 | A |
| 16 | I / 75 | Me-Oleat / 200 Cyclohexanol / 200 Solvesso 150 / ad 11 | Aerosol OT-A / 250 Emulpon EL 20 / 50 | A |
| 17 | I / 75 | Me-Oleat / 200 i-Butanol / 200 Solvesso 150 / ad 11 | Aerosol OT-A / 250 Emulpon EL 20 / 50 | A |
| 18 | I / 75 | Me-Oleat / 200 t-Butanol / 200 Solvesso 150 / ad 11 | Aerosol OT-A / 250 Emulpon EL 20 / 50 | A |
| 19 | I / 75 | Me-Oleat / 200 n-Butanol / 200 Solvesso 150 / ad 11 | Aerosol OT-A / 250 Emulpon EL 20 / 50 | A |
| 20 | I / 75 | Me-Oleat / 500 Solvesso 150 / 61 | Aerosol OT-A / 250 Emulpon EL 20 / 50 | D |
| 21 | I / 75 | Me-Oleat / 500 Spraytex-Öl / ad 11 | Aerosol OT-A / 250 Emulpon EL 20 / 50 | D |
| 22 | I / 75 | Me-Oleat / 500 Paraffin-Öl / ad 11 | Aerosol OT-A / 250 Emulpon EL 20 / 50 | D |
| 23 | I / 150 | Me-Oleat / 200 Solvesso 150 / ad 11 | Aerosol OT-A / 250 Emulpon EL 20 / 50 | D |

### Beispiel 24: EC-Formulierung

436,4 g einer 34,4 %igen toluolischen Lösung von (Ia) wurden unter Abdampfen von Toluol 5 Stunden bei 40°C und 20-30 mbar am Rotationsverdampfer gerührt und anschließend 3 Stunden bei 1 mbar und Raumtemperatur nachbehandelt. Der ölige Rückstand wurde dann mit der doppelten Menge an Solvesso 150 aufgenommen. Dann wurden die nachstehend angegebenen den Komponenten (b) und (c) des Beispiels 23 entsprechenden Hilfsstoffe eingerührt und mit Solvesso 150 auf 1 L aufgefüllt.

| | | | | |
|---|---|---|---|---|
| 24 | Ia / 150 | Me-Oleat / 200 Solvesso 150 / ad | Aerosol OT-A / 250 11 Emulpon EL 20 / 50 | D |

Die in obigen Beispielen verwendeten Hilfsstoffe sind in nachfolgender Tabelle 2 erläutert.

**Tabelle 2:**

| Name | Strukturtyp/Einsatzstoff | Hersteller |
|---|---|---|
| Komponente (b) | | |
| Me-Oleat | Methyloleat | Henkel |
| DBE-6 | Dimethyladipat | Dupont |
| DBE | Dicarbonsäureester-Gemisch | Dupont |
| Plastmoll DOA | Di-(2-Ethylhexyl)adipat | BASF |
| Glissofluid A 13 | Di-(iso-Nonyl)adipat | BASF |
| Aerosol OT-A | Dioctylnatriumsulfosuccinat in Erdöldestillat | Cytec Industries |
| Solvesso 150 | Naphthengemisch | Shell |
| Solvesso 200 | Naphthengemisch | Shell |
| Glissopal 2300 | Polyisobuten | BASF |
| Spraytex-Öl | C₁₈-C₂₄-Kohlenwasserstoffgemisch | Texaco |
| Paraffin-Öl | C₁₄-Alkangemisch | BASF |

| Komponente (c) | | |
|---|---|---|
| Emulpon EL 20 | Rizinusöl x 20 EO | Witco |
| Agrilan AEC 211 | Alkylbenzolsulfonsäure-Ca-Salz (mit 10-15 Gew.-% Isobutanol) | Akros |
| Emulan A | Ölsäure x 5,5 EO | BASF |
| Atlas G 1086 | Polyoxyethylensorbitol-hexaoleat | Unichema |
| Atlox 4914 | Polyester | Unichema |
| Pluronic RPE 2520 | Polypropylenoxid-Polyethylenoxid-Blockpolymer | BASF |
| Plurafac LF 131 | CB-C14-Polyoxethyl-Butylether, endgruppenverschlossen | BASF |

### Physikalische Eigenschaften: Stabilität und Emulgierverhalten

Die Bewertung der Stabilität von Öl-Suspensionskonzentraten (Beispiele 1 bis 22 wird in einem Schnellagerungstest untersucht. Hierzu werden die Proben in geschlossenen Glasbehältnissen 14 Tage bei 54°C gelagert. Anschließend wird die Wirkstoffkonzentration bestimmt. Dieser Wert in Relation zum ursprünglichen Wirkstoffgehalt ist ein Maß für die Stabilität des Öl-Suspensionskonzentrats.

Die Bewertung des Emulierverhaltens erfolgt nach visueller Beurteilung in Anlehnung an die Methode gemäß CIPAC MT 180 im 100 ml-Spritzkolben. Es wird ein 2 Gew.-%ige Mischung des Öl-Suspensionskonzentrats in Wasser angesetzt. Folgender Bewertungsmaßstab wird angelegt:
++: kein Rahm- oder Bodensatz;
+: wenig Rahm- oder Bodensatz, < 0,1 ml;
+/- > 0,1 < 0,5 ml Rahm- oder Bodensatz;
(-) > 0,5 ml Rahm- oder Bodensatz, inhomogene Probe.

Die folgende Tabelle 3 faßt die Stabilitätsdaten sowie die Beurteilung des Emulgierverhaltens bestimmter Öl-Suspensionskonzentrate zusammen.

**Tabelle 3:**

| Bsp. | Stabilität (% rel.) | Emulgierverhalten (2%) |
|---|---|---|
| 1 | 100 | + |
| 2 | 97,0 | + |
| 3 | 95,4 | + |
| 4 | 99,5 | + |
| 5 | 92,3 | ++ |
| 6 | 98,0 | + |
| 7 | 98,9 | ++ |
| 8 | 98,4 | ++ |
| 9 | 98,8 | ++ |
| 10 | 67,1 | ++ |
| 11 | 63,5 | + |
| 12 | 88,0 | (-) |
| 13 | 87,9 | ++ |
| 14 | 89,6 | (-) |
| 15 | 92,2 | n.b. |
| 16 | 90,5 | n.b. |
| 17 | 87,8 | n.b. |
| 18 | 93,4 | n.b. |
| 19 | 88 | n.b. |
| 20 | 97,5 | ++ |
| 21 | 98 | ++ |
| 22 | 98 | + |
| n.b.: wegen unzureichender Wirkstoffstabilität nicht bestimmt | | |

Insbesondere die erfindungsgemäßen Öl-Suspensionskonzentrate gemäß Beispiel 3 bis 5, 7 bis 9 und 20 bis 23 zeichnen sich durch eine ausgezeichnete Lagerstabilität aus. Das Emulgierverhalten ist zufriedenstellend.

Die Formulierungen aus den Beispielen 23 und 24 wurden in 50 ml-Ampullen bei 50°C gelagert. Die relativen Restanteile des Wirkstoffs (I) bzw. (Ia), analytisch jeweils als freie Säure bestimmt, sind in nachfolgender Tabelle 4 gezeigt.

**Tabelle 4:**

| Bsp. | Serumwert | 30 d | 90 d | 180 d |
|---|---|---|---|---|
| 23 | 0,01 % | 99,6 | 98,2 | 93,2 |
| 24 | 100 % | 88,4 | 72,4 | 56,2 |

Demnach weisen erfindungsgemäße Öl-SC-Formulierungen auf Basis des Wirkstoffsalzes (I) eine wesentlich bessere Lagerstabilität auf als EC-Formulierungen auf Basis der freien Wirkstoffsäure (Ia).

### Biologische Eigenschaften

Feldversuche mit verschiedenen Herbizid-Kombinationen in Reis wurden als randomisierte Blockanlage mit 3 bzw. 4 Wiederholungen durchgeführt. Die Parzellengröße der Versuche variierte zwischen 2 - 6 m². Alle Behandlungen der Produkte wurden mit einer Rückenspritze appliziert. Die Rückenspritze war mit einem Spritzrechen mit 4 bzw. 6 Flachstrahldüsen ausgerüstet. Die Produkte wurden mit einem Wasservolumen von 300 l/ha appliziert. Die Reis-Kultur wurde nach der Standard-Empfehlung gedüngt. Wegen der geringen Ungras-Population wurden zusätzlich pro Breitsaat 5 - 10 kg/ha Ungräser mit der Hand eingesät. Versuche mit starker Breitblattund Cyperus-Verunkrautung wurden 7 Tage nach der Applikation der Graminizide mit Bentazon oder 2,4-D appliziert, um Wechselwirkungen zu vermeiden. Die Entwicklungsstadien des Reis sowie der Unkräuter wurden gemäß BBCH-Skala bestimmt (Strauss R. 1994: Compendium of Growth Stage Identification Keys for Mono- and Dicotyledoneus Plants. Extended BBCH-Scale, ISBN 3-9520749-0-X). Die Selektivität und die herbizide Wirkung wurden gemäß der EPPO-Richtlinie (OEPP/EPPO 1998: Guideline for the Efficacy Evaluation of Herbizides - Weeds in Paddy Rice - EPPO Standard 1/62 (2) English. In: Guidelines for the Efficacy Evaluation of Plant Protection Products, Vol. 4, Herbicides and Plant Growth Regulators) bewertet.

Die nachfolgende Tabelle 5 faßt die Ergebnisse der durchgeführten Feldversuche zusammen.

**Tabelle 5:**

| Bsp. | A-Menge [g ai/ha] | % Pflanzenschäden nach | | | ECHCG | LEFCH |
|---|---|---|---|---|---|---|
| | | 7 Tagen | 21 Tagen | 42 Tagen | 42 Tage | 42 Tage |
| 20 | 38 | 2 | 4 | 3 | 96 | 98 |
| | 75 | 4 | 8 | 5 | 100 | 100 |
| 21 | 38 | 2 | 4 | 3 | 98 | 100 |
| | 75 | 4 | 14 | 9 | 100 | 100 |
| 22 | 38 | 2 | 5 | 4 | 96 | 99 |
| | 75 | 4 | 23 | 15 | 100 | 100 |
| ECHCG: Echinocloa crus-galli | | | | | | |
| LEFCH: Leptochloa chinesin | | | | | | |
| A-Menge: Aufwandmenge bezogen auf die Menge an Wirkstoff | | | | | | |

Diese Versuche zeigen, daß die erfindungsgemäße Hilfsstoffkomponente (b1), hier in Form von Methyloleat, verhältnismäßig geringe Pflanzenschäden bei allgemein guter Wirkung auf Ungräser mit sich bringt.

## Patentansprüche

1. Öl-Suspensionskonzentrat, umfassend
(a1) 2-{1-[2-(4-Chlorphenoxy)-propoxyimino]-butyl}-3-hydroxy-5-(tetrahydrothiopyran-3-yl)-cyclohex-2-enon-Lithiumsalz der Formel (I) 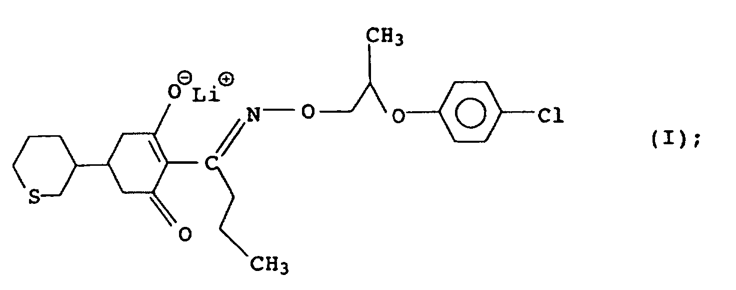
(b1) mindestens einen Mono- und/oder Dicarbonsäureester der Formel (IIa) oder (IIb),
R¹-CO-OR² (IIa)
R³-O-CO-A¹-CO-O-R⁴ (IIb)
wobei R¹ für einen geradkettigen oder verzweigten, gesättigten oder ungesättigen aliphatischen Rest mit 6 bis 30 Kohlenstoffatomen, R² für geradkettiges oder verzweigtes Alkyl oder Cycloalkyl, A¹ für geradkettiges oder verzweigtes Alkylen oder Cycloalkylen steht und R³, R⁴ unabhängig voneinander für einen geradkettigen oder verzweigten, gesättigten oder ungesättigen aliphatischen Rest mit 1 bis 24 Kohlenstoffatomen stehen;
(c1) mindestens ein anionisches Tensid der Formel (III),
R⁵-SO₃⁻ 1/n M⁽ⁿ⁺⁾ (III)
wobei M ein ein- oder zweiwertiges Kation ist (n = 1 oder 2) und R⁵ für einen geradkettigen oder verzweigten, aliphatischen oder heteroaliphatischen Rest mit 6 bis 30 Kohlenstoffatomen oder einen (C₆-C₃₀-Alkyl)arylrest steht; und
(c2)mindestens ein nichtionisches Tensid der Formel (IV),
[R⁶-CO-(EO)ₓ-]_{y}A² (IV)
wobei R⁶ für einen geradkettigen oder verzweigten, gesättigten oder ungesättigten, gegebenenfalls mono- oder dihydroxylierten aliphatischen Rest mit 8 bis 30 Kohlenstoffatomen steht, die Summe aller x Null bis 100 beträgt, y für 1 bis 7 steht, A² für Hydroxy oder Alkyloxy steht, wenn y für 1 steht, oder A² von einem Polyol abgeleitetet ist, wenn y für 2 bis 7 steht.

2. Öl-Suspensionskonzentrat nach Anspruch 1, umfassend
(a1) das Lithiumsalz der Formel (I) und
(a2) wenigstens einen weiteren herbiziden Pflanzenwirkstoff.

3. Öl-Suspensionskonzentrat nach Anspruch 2, wobei der weitere herbizide Pflanzenschutzwirkstoff ein Carbonsäure-Metallsalz der Formel (V) 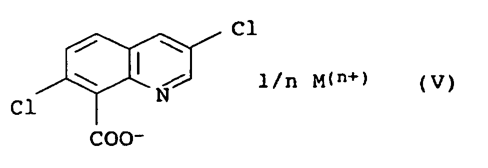 ist.

4. Öl-Suspensionskonzentrat nach einem der vorhergehenden Ansprüche, wobei die Komponente (b1) ausgewählt ist unter C₁-C₈-Alkylestern der Ölsäure, Di-(C₁-C₁₂-Alkyl)estern der Adipinsäure und Gemischen davon.

5. Öl-Suspensionskonzentrat nach einem der vorhergehenden Ansprüche, umfassend eine Komponente (b2), die ausgewählt ist unter wenigstens einem, gegebenenfalls hydrierten oder teilhydrierten, Alkylaromaten aus der Benzol- oder Naphthalin-Reihe.

6. Öl-Suspensionskonzentrat nach einem der vorhergehenden Ansprüche, wobei die Komponente (c1) ausgewählt ist unter Di-(C₁-C₁₂-Alkyl)sulfosuccinaten, (C₆-C₃₀-Alkyl)benzolsulfonaten und Gemischen davon.

7. Öl-Suspensionskonzentrat nach einem der vorhergehenden Ansprüche, wobei die Komponente (c2) ausgewählt ist unter Rizinusölpolyethoxylaten, Sorbitolpolyethoxyoleaten und Gemischen davon.

8. Öl-Suspensionskonzentrat nach einem der vorhergehenden Ansprüche, umfassend
(d) mindestens eine weitere Komponente, die ausgewählt ist unter
(d1)Lithium-Salzen,
(d2)Antiabsetzmitteln und
(d3)wasserbindenden Mitteln.

9. Verwendung eines Öl-Suspensionskonzentrats nach einem der Ansprüche 1 bis 8 als Pflanzenschutzmittel in der Landwirtschaft.

10. Verwendung nach Anspruch 9 als Reisherbizid.

## Claims

1. An oil suspension concentrate comprising
(a1) 2-{1-[2-(4-chlorophenoxy)propoxyimino]butyl}-3-hydroxy-5-(tetrahydrothiopyran-3-yl)cyclohex-2-enone lithium salt of the formula (I) 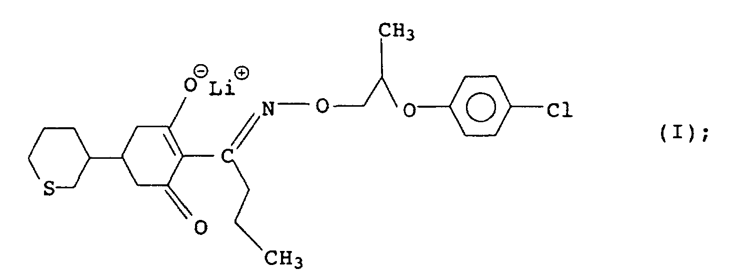
(b1) at least one mono- and/or dicarboxylic ester of the formula (IIa) or (IIb)
R¹-CO-OR² (IIa)
R³-O-CO-A¹-CO-O-R⁴ (IIb)
where R¹ is a straight-chain or branched saturated or unsaturated aliphatic radical having 6 to 30 carbons, R² is straight-chain or branched alkyl or cycloalkyl, A¹ is straight-chain or branched alkylene or cycloalkylene and R³, R⁴ independently of one another are straight-chain or branched saturated or unsaturated aliphatic radicals having 1 to 24 carbons;
(c1)at least one anionic surfactant of the formula (III)
R⁵-SO₃⁻ l/n M(ⁿ⁺) (III)
where M is a mono- or divalent cation (n = 1 or 2) and R⁵ is a straight-chain or branched aliphatic or heteroaliphatic radical having 6 to 30 carbons or a (C₆-C₃₀-alkyl)aryl radical; and
(c2)at least one nonionic surfactant of the formula (IV)
[R₆-CO-(EO)ₓ-]_{y}A² (IV)
where R⁶ is a straight-chain or branched saturated or unsaturated unsubstituted or mono- or dihydroxylated aliphatic radical having 8 to 30 carbons, the sum of all x is from zero to 100, y is from 1 to 7, A² is hydroxyl or alkyloxy if y is 1, or A² is derived from a polyol if y is from 2 to 7.

2. An oil suspension concentrate as claimed in claim 1 comprising
(a1)the lithium salt of the formula (I) and
(a2)at least one further herbicidal crop protection agent.

3. An oil suspension concentrate as claimed in claim 2, wherein the further herbicidal crop protection agent is a carboxylic acid metal salt of the formula (V)

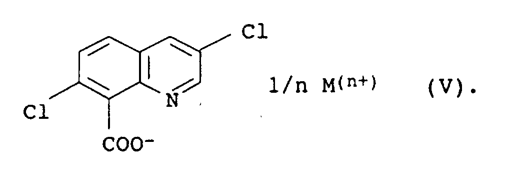

4. An oil suspension concentrate as claimed in any of the preceding claims, where the component (b1) is selected from the group consisting of C₁-C₈-alkyl esters of oleic acid, di(C₁-C₁₂-alkyl) esters of adipic acid and mixtures thereof.

5. An oil suspension concentrate as claimed in any of the preceding claims comprising a component (b2) which is selected from the group consisting of at least one alkylaromatic compound from the benzene or naphthalene series which may be hydrogenated or partially hydrogenated.

6. An oil suspension concentrate as claimed in any of the preceding claims where the component (c1) is selected from the group consisting of di(C₁-C₁₂-alkyl)sulfosuccinates, (C₆-C₃₀-alkyl)benzenesulfonates and mixtures thereof.

7. An oil suspension concentrate as claimed in any of the preceding claims where the component (c2) is selected from the group consisting of castor oil polyethoxylates, sorbitol polyethoxyoleates and mixtures thereof.

8. An oil suspension concentrate as claimed in any of the preceding claims comprising
(d) at least one further component selected from the group consisting of
(d1) lithium salts,
(d2) antisettling agents and
(d3) water-binding agents.

9. The use of an oil suspension concentrate as claimed in any of claims 1 to 8 as crop protection composition in agriculture.

10. The use as claimed in claim 9 as rice herbicide.

## Revendications

1. Concentré de suspension d'huile, comprenant :
(a1) un sel de lithium de 2-{1-[2-(4-chlorophénoxy)-propoxyimino]-butyl}-3-hydroxy-5-(tétrahydrothiopyran-3-yl)-cyclohex-2-énone de formule (I) 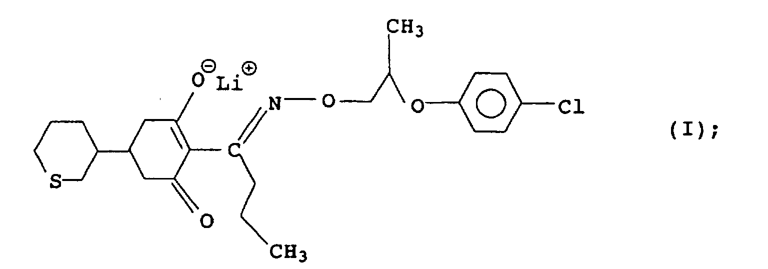
(b1) au moins un ester d'acide mono- et/ou dicarboxylique de formule (IIa) ou (IIb),
R¹-CO-OR² (IIa)
R³-O-CO-A¹-CO-O-R⁴ (IIb)
R¹ désignant un radical aliphatique saturé ou insaturé, à chaîne droite ou ramifiée, avec 6 à 30 atomes de carbone, R² un radical alkyle à chaîne droite ou ramifiée ou cycloalkyle, A¹ un radical alkylène à chaîne droite ou ramifiée ou cycloalkylène et R³ et R⁴ désignant, indépendamment l'un de l'autre, un radical aliphatique, saturé ou insaturé, à chaîne droite ou ramifiée, avec 1 à 24 atomes de carbone ;
(c1) au moins un tensio-actif anionique de formule (III)
R⁵-SO₃⁻ 1/n M(ⁿ⁺) (III)
dans laquelle M est un cation mono- ou divalent (n = 1 ou 2) et R⁵ désigne un radical aliphatique ou hétéroaliphatique, à chaîne droite ou ramifiée, avec 6 à 30 atomes de carbone ou un radical (C₆-C₃₀-alkyl)aryle ; et
(c2) au moins un tensio-actif non ionique de formule (IV)
[R⁶-CO-(EO)ₓ-]_{y}A² (IV)
R⁶ désignant un radical aliphatique à chaîne droite ou ramifiée, saturé ou insaturé, éventuellement mono- ou dihydroxylé, avec 8 à 30 atomes de carbone, la somme de tous les x allant de zéro à 100, y désignant 1 à 7, A² désignant un radical hydroxy ou alkyloxy lorsque y désigne 1 ou A² étant dérivé d'un polyol lorsque y désigne 2 à 7.

2. Concentré de suspension d'huile selon la revendication 1, comprenant :
(a1) le sel de lithium de formule (I) et
(a2) au moins un autre principe actif phytosanitaire herbicide.

3. Concentré de suspension d'huile selon la revendication 2, le principe actif phytosanitaire herbicide supplémentaire étant un sel métallique d'acide carboxylique de formule (V)

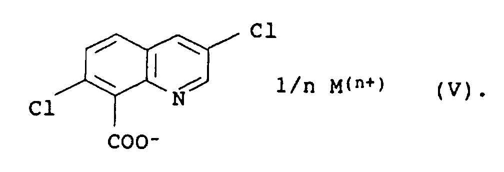

4. Concentré de suspension d'huile selon l'une des revendications précédentes, le composant (b1) étant sélectionné parmi les alkylesters C₁-C₈ de l'acide oléique, les di-(C₁-C₁₂-alkyl) esters de l'acide adipique et des mélanges de ceux-ci.

5. Concentré de suspension d'huile selon l'une des revendications précédentes, comprenant un composant (b2) sélectionné parmi au moins un aromatique alkylique, éventuellement hydrogéné ou partiellement hydrogéné, de la série du benzène ou de la naphtaline.

6. Concentré de suspension d'huile selon l'une des revendications précédentes, le composant (c1) étant sélectionné parmi les di-(C₁-C₁₂-alkyl)-sulfosuccinates, les (C₆-C₃₀-alkyl)benzène-sulfonates et des mélanges de ceux-ci.

7. Concentré de suspension d'huile selon l'une des revendications précédentes, le composant (c2) étant sélectionné parmi les polyéthoxylates d'huile de ricin, les polyéthoxyoléates de sorbitol et des mélanges de ceux-ci.

8. Concentré de suspension d'huile selon l'une des revendications précédentes, comprenant :
(d) au moins un autre composant qui est sélectionné parmi
(d1) les sels de lithium,
(d2) les agents de suspension et
(d3) les agents hygroscopiques.

9. Utilisation d'un concentré de suspension d'huile selon l'une des revendications 1 à 8 comme produit phytosanitaire dans l'agriculture.

10. Utilisation selon la revendication 9 comme herbicide pour le riz.
